(19) Europäisches Patentamt
European Patent Office
Office européen des brevets

(11) **EP 2 383 545 B1**

(12) **EUROPÄISCHE PATENTSCHRIFT**

(45) Veröffentlichungstag und Bekanntmachung des Hinweises auf die Patenterteilung:
**30.08.2017** **Patentblatt 2017/35**

(51) Int Cl.:
*G01P 3/481* (2006.01)     *G01P 13/04* (2006.01)
*G01F 1/075* (2006.01)     *G01F 1/115* (2006.01)

(21) Anmeldenummer: **11003338.8**

(22) Anmeldetag: **20.04.2011**

(54) **Technik zur Erfassung einer Drehbewegung**

Technique for recording a rotation

Technique de détection d'un mouvement de rotation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2010 DE 102010018271**

(43) Veröffentlichungstag der Anmeldung:
**02.11.2011 Patentblatt 2011/44**

(73) Patentinhaber: **Prof. Dr. Horst Ziegler und Partner GbR**
**70499 Stuttgart (DE)**

(72) Erfinder: **Ziegler, Horst Prof. Dr.**
**33100 Paderborn (DE)**

(74) Vertreter: **v. Bezold & Partner Patentanwälte - PartG mbB**
**Akademiestraße 7**
**80799 München (DE)**

(56) Entgegenhaltungen:
**WO-A2-02/073735     DE-A1- 3 330 500**
**US-A- 6 031 223     US-A1- 2008 272 834**
**US-B1- 6 279 248**

EP 2 383 545 B1

## Beschreibung

## Gebiet der Offenbarung

Die vorliegende Offenbarung betrifft das Erfassen einer Drehbewegung. Insbesondere betrifft die Offenbarung eine stromsparende elektronische Erfassung einer zeitveränderlichen Drehbewegung, wie die Drehbewegung eines Flügelrads eines Durchflusszählers.

## Technischer Hintergrund

Drehbewegungen können ein Maß für eine Förderbewegung sein. So kann die Drehbewegung einer Walze eines Fördersystems einer Transportgeschwindigkeit entsprechen, und eine Drehbewegung eines Flügelrads in einem Durchflusszähler kann ein Maß für einen Volumenstrom sein. Die Drehbewegung wird meist anhand einer geometrischen, optischen oder elektrischen Eigenschaft eines Drehelements erfasst, die eine Rotationssymmetrie des Drehelements bricht. Beispielsweise kann das Drehelement eine kreisförmige Scheibe sein, die halbseitig eine elektrisch leitfähige Metallbeschichtung aufweist. Vorteilhaft für eine möglichst reibungsfreie und wartungsarme Erfassung ist ein berührungsloses Abtasten der Drehbewegung. Dies kann beispielsweise durch einen mit der Metallbeschichtung induktiv oder kapazitiv koppelbaren Sensor erfolgen, der gegenüber dem Drehelement stationär angeordnet ist. Eine induktiv-resonante Kopplungsmodulation ist aus der Offenlegungsschrift DE 35 19 215 A1 bekannt. Induktiv-resonante Dämpfungsmodulationen ohne und mit Selbstabgleich sind aus den Druckschriften DE 197 25 806 A1 bzw. DE 39 23 398 C1 bekannt. Eine kapazitive, nicht-resonante Abtastung ist in der Offenlegungsschrift DE 199 08 612 A1 beschrieben. Gepulste kapazitive und induktive Verfahren der Abtastung sind aus den Offenlegungsschriften DE 10 2005 054 342 A1 bzw. DE 10 2008 018 099 A1 bekannt.

Zur Erfassung einer Richtung der Drehbewegung genügt ein einzelner Sensor nicht. Bei der sogenannten Quadraturerkennung können zwei Sensoren A und B zueinander um 90° in Drehrichtung versetzt angeordnet sein. Nur in einem Drehstellungsbereich, in dem ein Sensor die Metallbeschichtung erfasst, ist ein dem jeweiligen Sensor zugeordnetes Bit gesetzt, womit ein durch zwei Bits definierter Zustand jeden der $2^2 = 4$ Quadranten beschreibt. Übergänge zwischen den vier Zuständen bestimmen die Drehrichtung zu jeder Viertelumdrehung der Drehbewegung.

Ein kontinuierlicher Betrieb der Sensoren nebst zugehöriger Auswerteelektronik hat einen Strombedarf von etwa 1 mA. Aus diesem Grund werden die Sensoren häufig gepulst betrieben mit Abtastzeiten von einigen Millisekunden (ms). Eine hierfür notwendige Abtastrate abtastung ergibt sich aus dem Abtasttheorem, demzufolge für eine Maximaldrehzahl $f_{max} = \omega_{max}/(2\pi)$ und bei idealer Erkennung der vier Quadranten jeder Sensor mindestens mit einer Abtastrate $f_{Abtastung} = 4\, f_{max}$ betrieben werden muss. In der Realität ist ein einen Zustandsübergang festlegender Schwellwert oftmals nicht ideal. So kann ein erster von zwei aufeinanderfolgenden Zustandsübergänge zu spät und ein zweiter zu früh erfolgen. Dies verkürzt eine Zustandsdauer des zwischen diesen Übergängen liegenden Zustands, weshalb eine sichere Abtastung des dem Zustand entsprechenden Quadranten eine Erhöhung der Abtastraten beider Sensoren erfordert. Beispielsweise halbiert ein vom idealen Schwellwert um 50% abweichender realer Schwellwert die Zustandsdauer und erfordert somit eine Abtastrate von $f_{Abtastung} = 8\, f_{max}$. Für eine Maximaldrehzahl von beispielsweise 50 Umdrehungen pro Sekunde, wie sie bei Haushaltswasserzählern typischerweise erreicht wird, ist so eine Abtastrate von mindestens 400 Hz erforderlich. In Anbetracht der üblicherweise mit einer binären Zeitbasis arbeitenden Mikroprozessorsystemen wählt man unter diesen Bedingungen meist eine Abtastrate von $f_{Abtastung} = 512$ Hz. Benötigt jeder der beiden Sensoren während einer Abtastung einen Strom von beispielsweise 1 mA bei einer Einschaltdauer von beispielsweise 10 $\mu$s, beträgt allein der Beitrag des mittleren Sensorenstroms rund 10 $\mu$A. Bei einer für einen Durchflusszählers gewünschten Batterielaufzeit von gut 11 Jahren entsprechenden 100.000 Stunden beträgt allein zur Abtastung der zwei Sensoren eine Kapazitätsanforderung an die Batterie 1.000 mAh.

Eine bekannte Vorgehensweise zur Reduzierung des Strombedarfs sind variable Abtastraten, da Durchflusszähler nur selten, wenn überhaupt, mit der konstruktiven Maximaldrehzahl $f_{max}$ drehen. Zur Reduzierung des Stromverbrauchs schlägt die Druckschrift EP 1 191 310 A2 vor, die Abtastrate an die jeweils bestimmte Drehzahl des Bewegungsmessers anzupassen. Dies setzt allerdings voraus, dass die Drehzahl im Vergleich zur Abtastrate nur langsam ansteigt, so dass die variable Abtastrate bei einem Anstieg der Drehzahl noch rechtzeitig erhöht wird. Messungen haben gezeigt, dass bei typischen Wasserzähleranwendungen (beispielsweise mit Toiletten-Druckspülern als Verbrauchen) die Drehzahl eines Flügelradzählers im Bereich von Millisekunden von einem Stillstand auf die Maximaldrehzahl $f_{max}$ übergeht. Wird durch die langsame Abtastrate des Stillstands diese Beschleunigung verpasst, kann es vorkommen, dass der Zähler mit der langsamen Abtastrate eine Hochdrehzahlphase durch einen stroboskop-ähnlichen Effekt vollständig verpasst und durch die zu langsame Abtastrate entweder viel zu wenig, oder an Stelle der schnellen Vorwärtsdrehung sogar eine langsame Rückwärtsdrehung, registriert.

Das Dokument US 2008/0272834 A1 beschreibt eine Technik zur Erfassung von Mehrfachumdrehungen. Eine absolute Umdrehungsanzahl wird im Fall einer Unterbrechung einer externen Stromversorgung durch Umschalten auf eine in ihrer Kapazität begrenzte "Backup"-Stromversorgung weiterhin erfasst. Das von einem rotierenden Magneten verursachte Magnetfeld wird mit einer Phasendifferenz von 90° von zwei Erfassungselementen erfasst und durch Pulserzeugungsabschnitte in ein Rechtecksignal A bzw. B umgesetzt. Der Pulsgeneratorabschnitt für das Signal B wird mit Leistung aus der "Backup"-Stromversorgung für eine vorbestimmte Zeitdauer beginnend mit der Flanke des A-Signals versorgt.

Das Dokument US 6,031,223 beschreibt einen Signalgeber mit Speicher, in dem ein Minimum und ein Maximum abgelegt sind, wobei Sensoren des Signalgebers nur aktiviert werden, wenn die Drehzahl einer Drehscheibe zwischen dem Minimum und dem Maximum liegt. Die Sensoren sind um 180°, d. h. gegenüberliegend, angeordnet.

Das Dokument WO 02/073735 A2 beschreibt einen Messzähler, bei dem mittels der bekannten Quadraturerfassung eine Drehbewegung eines Magneten in vier Segmenten erfasst wird.

## Abriss der Erfindung

Der vorliegenden Erfindung liegt die Aufgabe zugrunde, eine Vorrichtung und ein Verfahren zur Erfassung einer Drehbewegung bereitzustellen, die schnelle Beschleunigungen bis zu einer Maximaldrehzahl sicher erkennen und einen deutlich geringeren Strombedarf als herkömmliche Techniken aufweisen.

Die Aufgabe ist gemäß einem ersten Aspekt durch eine Vorrichtung zur Erfassung einer Drehbewegung mit den Merkmalen des Anspruchs 1 gelöst. Die Vorrichtung umfasst einen ersten Sensor zum Erfassen eines ersten Drehstellungsbereichs eines Drehelements, einen zweiten Sensor zum Erfassen eines zweiten Drehstellungsbereichs des Drehelements, und eine Steuerung. Der zweite Drehstellungsbereich ist um 10° bis 170°, vorzugsweise im Wesentlichen 90°, gegenüber dem ersten Drehstellungsbereich versetzt. Die Steuerung ist dazu ausgebildet, im Wesentlichen nur im Fall einer Änderung eines ersten Signals des ersten Sensors den zweiten Sensor zum Erfassen eines zweiten Signals zu aktivieren und (aufgrund der Änderung) einen Zähler der Drehbewegung zu inkrementieren, wobei die Steuerung ferner dazu ausgebildet ist, den zweiten Sensor nur zu aktivieren, falls innerhalb einer Maximalzeit vor der Änderung des ersten Signals keine (weitere) Änderung des ersten Signals erfasst wurde.

Die Steuerung kann dazu ausgebildet sein, das zweite Signal nur zu erfassen und/oder den zweiten Sensor nur zu aktivieren, falls die Änderung des ersten Signals nicht auf eine (im Zuge der regelmäßigen Erfassung oder einer unregelmäßigen Erfassung) innerhalb der Maximalzeit vorausgegangene Änderung des ersten Signals folgt. Die Erfassung des zweiten Signals und/oder die Aktivierung des zweiten Sensors kann der zusätzlichen Bedingung unterliegen, dass keine weitere Änderung während der Maximalzeit (unmittelbar) vor der jetzigen (also aktuellen) Änderung erfasst wurde. Ist während der Maximalzeit vor der Änderung (wenigstens) eine weitere Änderungen des ersten Signals erfasst worden, kann die Erfassung des zweiten Signals und/oder die Aktivierung des zweiten Sensors unterbleiben. In einer Verwendung, bei der nur langsame Drehungen entgegen einer Vorzugsrichtung ("Rückwärtsdrehungen") zu erfassen sind, kann ein Erfassen des zweiten Signals auch dann unterbleiben, falls seit der letzten Signaländerung mehr als eine Erfassungsperiode oder Abtastperiode vergangen ist.

Die Maximalzeit kann vorbestimmt oder variabel sein. Die vorausgegangene Änderung kann zur aktuellen Änderung entgegengesetzt sein. Die aktuelle Änderung kann die vorausgehende Änderung kompensieren. Die Erfassung des ersten Signals kann regelmäßig sein. Eine regelmäßige Erfassung kann periodisch (d.h. mit einheitlichen Zeitintervallen zwischen den Erfassungen) sein oder kann "rhythmisch" (d.h. mit zwei oder mehr verschiedenen und sich wiederholenden Zeitintervallen zwischen den Erfassungen) sein. Im Fall einer periodischen Erfassung kann eine Frequenz der Erfassung als Erfassungsrate oder Abtastrate bezeichnet werden.

Vorteilhafterweise kann bei einer Änderung des ersten Signals ein Zeitstempel gespeichert werden. Ferner kann bei einer Änderung des ersten Signals das Vorliegen einer innerhalb der Maximalzeit vorausgegangenen Änderung des ersten Signals (als Ausschlusskriterium für die Aktivierung des zweiten Sensors) anhand einer Zeitdifferenz zwischen einer Ist-Zeit und dem (in Zuordnung zu der vorausgehenden Änderung) gespeicherten Zeitstempel bestimmt werden. Dadurch kann die Vorrichtung, insbesondere eine Recheneinheit der Vorrichtung, während Zeiträumen ohne Änderung des ersten Signals zum Vorteil einer weiteren Stromersparnis im Wesentlichen inaktiv sein.

Die Maximalzeit kann durch eine Anzahl an Erfassungen des ersten Signals bestimmt sein. Im Fall einer regelmäßigen Erfassung (zumindest des ersten Signals) kann die Maximalzeit durch eine Anzahl an regelmäßigen Erfassungen oder Erfassungsintervallen bestimmt sein. Vorzugsweise kann die Maximalzeit, $T_{max}$, ein Vielfaches (auch: "Vielfachheit" oder "Anzahl") eines regulären Erfassungsintervalls, $T_{Ab-tastung}=1/f_{Abtastung}$, sein. D.h. es kann für die Maximalzeit gelten:

$$T_{max} = N \cdot T_{Abtastung} \text{ mit } N = 1, 2, 3, 4, \ldots, 10, 11, 12, \ldots.$$

Die innerhalb der Maximalzeit vorausgegangene Änderung des ersten Signals kann eine (vorzugsweise im Zuge der regelmäßigen Erfassung) unmittelbar vorhergehende Änderung sein (im Fall N=1). Alternativ kann die innerhalb der Maximalzeit vorausgegangene Änderung des ersten Signals die unmittelbar vorhergehende Änderung oder eine (vorzugsweise im Zuge der regelmäßigen Erfassung) bei der vorletzten Erfassung festgestellte Änderung sein (im Fall N=2). Alternativ kann die innerhalb der Maximalzeit vorausgegangene Änderung des ersten Signals die unmittelbar vorhergehende Änderung, die bei der vorletzten Erfassung festgestellte Änderung oder eine (vorzugsweise im Zuge der regelmäßigen Erfassung) bei der drittletzten Erfassung festgestellte Änderung sein (im Fall N=3). Allgemein kann eine (vorzugsweise im Zuge der regelmäßigen Erfassung) bei den letzten N Erfassungen des ersten Signals festgestellte Änderung des ersten Signals die innerhalb der Maximalzeit vorausgegangene Änderung des ersten Signals sein.

Durch die Maximalzeit kann eine Drehzahlschwelle bestimmbar sein, bis zu der das zweite Signal erfasst wird. Ab oder oberhalb der Drehzahlschwelle kann die Erfassung des zweiten Signals unterbleiben. Die Drehzahlschwelle, $f^{(S)}{}_{max}$, kann mit der Maximalzeit, $T_{max}$, oder der Vielfachheit, N, gemäß

$$f^{(S)}{}_{max} = f_{Abtastung}/(2{\cdot}N) = 1/(2{\cdot}N{\cdot}T_{Abtastung}) = 1/(2{\cdot}T_{max})$$

in Zusammenhang stehen. So ist eine noch weitergehende Stromersparnis erreichbar. Im Fall der unterbliebenen Aktivierung des zweiten Sensors und/oder Erfassung des zweiten Signals kann eine vorbestimmte Richtungsinformation (beispielsweise eine fest vorgegebene Vorzugsdrehrichtung) zur Richtungsbestimmung verwendet werden.

Die Maximalzeit und/oder die Vielfachheit kann in Abhängigkeit von einer typischen Drehzahl der Drehbewegung im Normalbetrieb gewählt sein. Vorteilhafterweise kann die Maximalzeit und/oder die Vielfachheit so klein gewählt werden, dass eine Drehzahl von (z.B. technisch möglichen oder strukturell erwarteten) Drehbewegungen entgegen der Vorzugsdrehrichtung kleiner als die Drehzahlschwelle ist. Mit weiterem Vorteil kann die Maximalzeit und/oder die Vielfachheit so groß gewählt werden, dass die typische Drehzahl (in der Vorzugsdrehrichtung) größer als die Drehzahlschwelle ist.

Indem die Aktivierung des zweiten Sensors von einer Änderung des ersten Signals des ersten Sensors abhängig gemacht wird, kann ein Strombedarf für Sensorbetrieb und Sensorauswertung auf Rund die Hälfte verringert werden. Die Verringerung kann insbesondere erreichbar sein, wenn die Drehbewegung überwiegend (d.h. in einem Großteil der Zeit) ruht. Indem die Aktivierung von der zusätzlichen Bedingung (d.h. keiner Änderung in der Maximalzeit davor) abhängig gemacht wird, kann die Verringerung zusätzlich bei einer Drehbewegung erreichbar sein, deren Drehzahl die Drehzahlschwelle in einem Großteil des Normalbetriebs überschreitet. Dies kann insbesondere bei der Erfassung der Drehbewegung einer Umwälzpumpe oder eines Durchflusszählers in einem Kreislauf mit Umwälzpumpe vorteilhaft sein. Solche Kreisläufe können einen Heizungskreislauf umfassen. Die Vorrichtung kann Teil eines Wärmezählers sein.

Die Abhängigkeit "im Wesentlichen nur im Fall" kann in einer einfachen Ausführungsform eine hinreichende Bedingung (zur Aktivierung) sein. Im Allgemeinen ist die Bedingung nicht als hinreichende zu verstehen. D.h. eine Ausführungsform, die eine Aktivierung des zweiten Sensors von einer weiteren Bedingung abhängig macht, ist mit umfasst.

Eine "Drehbewegung" im Sinne dieser Offenbarung schließt eine oder mehrere Vollumdrehungen in zumindest einer Drehrichtung ein. Die Drehbewegung erfolgt vorzugsweise um eine raumfeste Drehachse. Im Allgemeinen kann eine (auch veränderliche) Drehachse $\underline{\omega}$ für einen am Ort $\underline{r}_P$ mit Geschwindigkeit $\underline{v}_P$ bewegten Referenzpunkt P durch $\underline{\omega} = \underline{r}_P \times \underline{v}_P / r_P{}^2$, für mehrere Punkte P (etwa eines starren Körpers) als gewichtetes Mittel $\underline{\omega} = <\underline{r}_P \times \underline{v}_P / r_P{}^2>_P$ und für ein kontinuierliches Bewegungsfeld $\underline{v}(\underline{r})$ (etwa eines verformbaren Körpers) durch $\underline{\omega} = rot\ \underline{v}(\underline{r})$ bestimmt sein. Die Drehbewegung kann insbesondere eine Drehbewegung einer Geberscheibe als Drehelement sein.

Das Drehelement kann Teil der Vorrichtung sein. Insbesondere kann das Drehelement zur Volumendurchflussmessung von Flüssigkeiten mit einem Flügelrad gekoppelt sein. Im Regelfall ist das Drehelement nicht Teil der Vorrichtung. Insbesondere kann die Vorrichtung in Sensorreichweite zum Drehelement abnehmbar angebracht sein.

Im Sinne dieser Offenbarung ist ein "Drehstellungsbereich" eine echte Teilmenge der eine Vollumdrehung bildenden Drehstellungen. Ein Drehstellungsbereich ist vorzugsweise ein zusammenhängendes Winkelsegment der Drehbewegung, insbesondere ein 180° umfassendes Winkelsegment. Ein "Erfassen eines Drehstellungsbereichs" schließt das Erfassen einer Drehstellung als zum Drehstellungsbereich gehörend und das Erfassen einer Drehstellung als nicht zum Drehstellungsbereich gehörend ein. Mit anderen Worten umfasst das Erfassen eines Drehstellungsbereichs Vorliegen und Nicht-Vorliegen des Drehstellungsbereichs. Eine "Drehstellungsänderung" liegt bei Eintritt und Verlassen des Drehstellungsbereichs vor.

In dieser Offenbarung umfasst eine "Änderung eines Signals" grundsätzlich eine einer Drehstellungsänderung entsprechende Signaländerung. Vorzugsweise stellt ein statistischer Signalfehler (etwa durch Rauschen oder Flackern) oder ein systematischer Signalfehler (etwa durch eine Signaldrift) keine Änderung dar. Signaländerungen können durch Überschreiten eines ersten Schwellwerts oder Unterschreiten eines zweiten Schwellwerts als einer Drehstellungsänderung entsprechende Signaländerung erfasst werden. Insbesondere kann die Signaländerung eine Änderung gegenüber einem zuvor erfassten (und gespeicherten) Signal, Sensorstatus oder Drehstellungszustand sein.

Der erste und zweite Drehstellungsbereich kann jeweils eine Ausdehnung von zumindest im Wesentlichen 180° aufweisen. Die Drehbewegung kann eine Drehachse definieren und der zweite Sensor kann gegenüber dem ersten Sensor bezüglich der Drehachse um zumindest im Wesentlichen 90° versetzt angeordnet sein.

Die Steuerung kann zur fortlaufenden Erfassung des ersten Signals ausgebildet sein. Die fortlaufende Erfassung kann kontinuierlich (vorzugsweise durchgehend) oder regelmäßig (vorzugsweise periodisch mit einer festen Erfassungsrate) sein.

Der Zähler kann einen eine Umdrehungszahl speichernden Speicher umfassen. Das "Inkrementieren" umfasst grundsätzlich den Fall eines positiven oder negativen Inkrements. So ist es möglich, einen aufintegrierten Zählerstand ohne Driftfehler auch über eine lange autonome Laufzeit zu aktualisieren und (über eine Schnittstelle) auszugeben.

Zum Zwecke einer Richtungserkennung kann die Steuerung ferner dazu ausgebildet sein, ein einer Richtung der Drehbewegung entsprechendes Vorzeichen der Inkrementierung aufgrund der Änderung des ersten Signals in Verbindung mit dem zweiten Signal festzulegen. So können Pendelbewegungen einer im Wesentlichen stehenden Wassersäule richtig erfasst werden.

Für eine weitere Verringerung des Stromverbrauchs kann die Steuerung ferner dazu ausgebildet sein, regelmäßig das erste Signal zu erfassen und im Fall von zwei (oder mehr) aufeinanderfolgenden Änderungen im Zuge der regelmäßigen Erfassung des ersten Signals den Zähler mit einem vorbestimmten Vorzeichen zu inkrementieren. Alternativ oder ergänzend kann die Steuerung ferner dazu ausgebildet sein, (bei der regelmäßigen Erfassung oder einer unregelmäßigen Erfassung des ersten Signals) im Fall einer vorausgehenden Änderung des ersten Signals innerhalb der Maximalzeit den Zähler mit dem vorbestimmten Vorzeichen zu inkrementieren. Während eine ideale Erkennung der (einer Drehstellungsänderung, beispielsweise einem Quadraturübergang) entsprechenden Änderung des ersten Signals eine Erfassungsrate ermöglicht, die um einen Faktor 360°/90° = 4 größer als eine maximale Umdrehungszahl der Drehbewegung ist, kann in der Praxis eine Erkennung der Drehstellungsänderungen um rund 45° verfälscht sein. Entsprechend kann bei herkömmlichen Techniken zur Erfassung einer Drehbewegung eine um einen Faktor 360°/(90° - 45°) = 8 größere Erfassungsrate als die maximale Umdrehungsrate der Drehbewegung notwendig sein. Durch die Inkrementierung des Zählers bei mehreren aufeinanderfolgenden Änderungen des ersten Signals kann (gemäß der vorbestimmten Richtungsinformation) allein aufgrund der regelmäßigen Erfassung des ersten Drehstellungsbereichs der Zähler inkrementiert werden. Eine Rate der regelmäßigen Erfassung des ersten Signals kann so auf einen Faktor 360°/(2 · 90° - 45°) = 2,7 der Maximalumdrehungszahl verringert werden, entsprechend einer weiteren Verringerung des Stromverbrauchs um einen Faktor (2 · 90° - 45°)/(90° - 45°) = 3. Gegenüber herkömmlichen Techniken zur Erfassung einer Drehbewegung ist damit eine Verringerung des Stromverbrauchs um einen Faktor von rund 2 · 3 = 6 erreichbar.

Zur noch weiteren Stromreduzierung kann die Steuerung ferner dazu ausgebildet sein, das zweite Signal nur zu erfassen, falls die Änderung des ersten Signals nicht auf eine im Zuge der regelmäßigen Erfassung unmittelbar vorhergehende Änderung des ersten Signals folgt. Dies ist insbesondere möglich, wenn in diesem Fall das zweite Signal (wegen der vorbestimmten Richtungsinformation) nicht zur Richtungsbestimmung verwendet wird.

Gemäß einem weiteren Aspekt ist die Aufgabe durch eine Vorrichtung zur Erfassung einer Drehbewegung gelöst, die umfasst einen ersten Sensor zum Erfassen eines ersten Drehstellungsbereichs, einen zweiten Sensor zum Erfassen eines zweiten Drehstellungsbereichs, und eine Steuerung. Der zweite Drehstellungsbereich ist um 10° bis 170°, vorzugsweise im Wesentlichen 90°, gegenüber dem ersten Drehstellungsbereich versetzt. Die Steuerung ist dazu ausgebildet, regelmäßig ein erstes Signal des ersten Sensors und ein zweites Signal des zweiten Sensors zumindest im Wesentlichen zeitgleich zu erfassen. Ferner vermag die Steuerung, im Fall einer Änderung entweder des ersten oder des zweiten Signals, einen Zähler um einen einfachen Betrag zu inkrementieren, und im Fall einer Änderung des ersten und des zweiten Signals, den Zähler um einen zumindest im Wesentlichen zweifachen Betrag zu inkrementieren. Dadurch ist (auch ohne eine von einer Änderung des ersten Signals abhängigen Erfassung des zweiten Signals) eine Erfassungsrate der regelmäßig erfassten ersten und zweiten Signale gegenüber herkömmlichen Techniken zur Erkennung einer Drehbewegung (aus oben genanntem Grund) um rund einen Faktor 3 verringerbar.

Die im Wesentlichen zeitgleiche Erfassung schließt kurz aufeinanderfolgende Erfassungen ein, während denen die Drehbewegung (bei der maximalen Drehzahl) höchstens 5°, vorzugsweise höchstens 2°, beträgt.

Für eine Richtungserkennung kann die Steuerung ferner dazu ausgebildet sein, im Fall der Änderung (nur) eines der Signale ein einer Richtung der Drehbewegung entsprechendes Vorzeichen der Inkrementierung auf Grundlage der Änderung des geänderten Signals in Verbindung mit dem unveränderten Signal festzulegen.

Bei einer für hohe Drehzahlen vorbestimmten Drehrichtung (beispielsweise einer Vorzugsdrehrichtung) kann die Steuerung ferner dazu ausgebildet sein, im Fall der Änderung beider Signale den Zähler mit einem der vorbestimmten Drehrichtung entsprechenden Vorzeichen zu inkrementieren. Dies ermöglicht ein zuverlässiges Erfassen der Drehbewegung bis zu einer korrekt zu registrierenden maximalen Drehzahl entgegen der vorbestimmten Drehrichtung (beispielsweise eine "Rückwärtsdrehbewegung"), die (höchstens) halb so groß ist wie die maximale Drehzahl einer korrekt zu registrierenden Drehbewegung in die vorbestimmte Drehrichtung ("Vorwärtsdrehbewegung").

Der erste und zweite Sensor können zueinander um im Wesentlichen 90° drehversetzt sein, und das einfache Inkrement kann im Wesentlichen einer Viertelumdrehung und das zweifache Inkrement im Wesentlichen einer Halbumdrehung entsprechen.

In allen Ausführungsformen kann dem ersten und zweiten Sensor jeweils ein Komparator zugeordnet sein. Die Zuordnung kann derart sein, dass jeweils ein erster und zweiter Komparator (dauerhaft) dem ersten bzw. zweiten Sensor zugeordnet ist. Alternativ kann ein Komparator bei der Signalerfassung in kurzer Abfolge dem ersten und zweiten Sensor zugeordnet sein (für eine im Wesentlichen zeitgleiche Erfassung). Der Komparator kann das jeweilige erste oder zweite Sensorsignal in Abhängigkeit von einem Schwellwert in ein erstes bzw. zweites Logiksignal umsetzen. Ein dadurch definiertes erstes und zweites Logiksignal kann den ersten bzw. zweiten Drehstellungsbereich angeben, vorzugsweise als binäres Statussignal (mit Werten 0 und 1, beispielsweise repräsentiert durch entsprechende Spannungspegel). Die einer Drehstellungsänderung entsprechende Änderung des ersten oder zweiten Signals kann ein Erreichen (Übergang von 0 nach 1) oder Verlassen (Übergang von 1 zu 0) des ersten bzw. zweiten Drehstellungsbereichs angeben.

Die Vorrichtung kann ferner eine erste Speichereinheit und eine zweite Speichereinheit umfassen, die jeweils das erste bzw. zweite Logiksignal speichern. Die erste und zweite Speichereinheit kann in Abhängigkeit vom (gegenwärtig) gespeicherten Logiksignal den zur Umsetzung eines (zukünftigen) ersten und zweiten Logiksignals jeweils eingesetzten Schwellwert (des zugeordneten Komparators) derart beeinflussen, dass die Umsetzung des jeweiligen ersten bzw. zweiten Sensorsignals hysteretischen ist. D.h. ein Schaltverhalten des zugeordneten Komparators ist hysteretisch. So kann ein den Schwellwert überschreitendes Sensorssignal in ein gesetztes Logiksignal umgesetzt werden und eine Absenkung des entsprechenden Schwellwerts (gegenüber einem Basisschwellwert) bewirken. Alternativ oder ergänzend kann ein den Schwellwert unterschreitendes Sensorsignal in ein gelöschtes Logiksignal umgesetzt werden und eine Erhöhung des entsprechenden Schwellwerts (gegenüber einem Basisschwellwert) bewirken. Zudem ist bei kontinuierlichem Betrieb des zugeordneten Komparators ein Komparator mit (intrinsisch) hysteretischem Schaltverhalten einsetzbar. Durch die hysteretische Umsetzung kann ein Übergangsflackern eines der Logiksignale vermieden werden. So kann das hysteretische Schaltverhalten bei der von der Änderung des ersten Signals abhängigen Erfassung des zweiten Signals zur noch weiteren Stromersparnis ein unnötig häufiges Erfassen des zweiten Signals aufgrund von Übergangsflackern des ersten Signals im Stillstand vermeiden.

Für eine weitere Reduzierung des Strombedarfs kann zumindest der zweite Sensor, vorzugsweise auch ein dem zweiten Sensor zugeordneter Komparator oder beide Sensoren (und ein jeweils zugeordneter Komparator), nur zur jeweiligen Signalerfassung (gepulst) betrieben, d.h. bestromt, werden. Auch können die erste und zweite Speichereinheit nur zur jeweiligen Signalerfassung (und einem späteren Auslesen) (gepulst) betrieben werden im Fall nichtflüchtiger Speichereinheiten.

Zur adaptiven Schwellwertbestimmung kann die Vorrichtung ferner einen zum ersten Sensor um 100° bis 260°, vorzugsweise im Wesentlichen 180°, (um die Drehachse der Drehbewegung) versetzt angeordneten dritten Sensor zur Erfassung eines dritten Signals umfassen. Der dritte Sensor kann einen zum ersten Drehstellungsbereich im Wesentlichen komplementären dritten Drehstellungsbereich erfassen. Das dritte Signal kann zum ersten Signal einen im Wesentlichen komplementären Verlauf aufweisen. Die Vorrichtung kann eine Schwellwertbestimmungseinheit umfassen zur Bestimmung des Schwellwerts als eine Funktion, vorzugsweise als Mittelwert, des ersten Signals und des dritten Signals. Der Mittelwert ist vorzugsweise ein (bei der Herstellung eingestelltes) gewichtetes Mittel. Eine vom ersten und dritten Signal abhängige Bestimmung des Schwellwerts ermöglicht eine variable Anpassung des Schwellwerts während des autonomen Betriebs. Das erste und dritte Signal werden vorzugsweise im Wesentlichen zeitgleich erfasst. Für einen geringen Stromverbrauch kann das dritte Signal seltener als das erste Signal erfasst werden. Vorzugsweise wird das dritte Signal gegenüber dem ersten Signal nur jedes zweite oder vierte Mal erfasst und in einer dritten Speichereinheit gespeichert.

Alternativ oder ergänzend kann ein vierter Sensors zum zweiten Sensor um 100° bis 260°, vorzugsweise im Wesentlichen 180°, versetzt angeordnet sein zur Erfassung eines vierten Signals. Zur Umsetzung des zweiten Sensorsignals kann der zugeordnete Schwellwert (in entsprechender Weise wie bei der Umsetzung des ersten Sensorsignals) als Funktion des zweiten Signals und des vierten Signals bestimmt werden. Alternativ kann ein einheitlicher Schwellwert oder bei hysteretischer Umsetzung ein einheitlicher Basisschwellwert für sowohl die Umsetzung des ersten Sensorsignals als auch des zweiten Sensorsignals eingesetzt sein. Der einheitliche (Basis-)Schwellwert kann als Mittelwert des ersten und dritten Signals, des zweiten und vierten Signals, oder des ersten, zweiten, dritten und vierten Signals bestimmt werden.

Die Vorrichtung kann ferner eine bezüglich der Drehachse der Drehbewegung zentrierte Geberspule umfassen, die dazu ausgebildet ist, bei der Erfassung wenigstens eines der Signale ein Magnetfeld zu erzeugen. Jeder der Sensoren kann jeweils eine Empfängerspule aufweisen, die dazu ausgebildet ist, ein vom Magnetfeld induziertes und vom Drehelement drehstellungsabhängig moduliertes Spannungssignal zu erfassen.

Gemäß einem weiteren Aspekt ist die Aufgabe durch ein Verfahren zur Erfassung einer Drehbewegung mit den Schritten des Anspruchs 14 gelöst. Das Verfahren umfasst ein (fortlaufendes) Erfassen eines ersten Signals (eines ersten Sensors) hinsichtlich eines ersten Drehstellungsbereichs und, im Wesentlichen nur im Fall einer Änderung des ersten Signals, ein Aktivieren eines (zweiten) Sensors zum Erfassen eines zweiten Signals hinsichtlich eines gegenüber dem ersten Drehstellungsbereich um 10° bis 170°, vorzugsweise im Wesentlichen 90°, versetzten zweiten Drehstellungsbereichs. Ein Zähler der Drehbewegung wird aufgrund der Änderung des ersten Signals inkrementiert. Der zweite Sensor wird nur aktiviert, falls innerhalb einer Maximalzeit vor der Änderung des ersten Signals keine (weitere) Änderung des ersten Signals erfasst wurde.

Ein einer Richtung der Drehbewegung entsprechendes Vorzeichen der Inkrementierung kann auf Grundlage der Änderung des ersten Signals in Verbindung mit dem zweiten Signal festgelegt werden.

Gemäß einem noch weiteren Aspekt ist die Aufgabe durch ein Verfahren zur Erfassung einer Drehbewegung gelöst, das umfasst ein regelmäßiges (und zumindest im Wesentlichen zeitgleiches) Erfassen eines ersten Signals hinsichtlich eines ersten Drehstellungsbereichs und eines zweiten Signals hinsichtlich eines gegenüber dem ersten Drehstellungsbereich um 10° bis 170°, vorzugsweise im Wesentlichen 90°, versetzten zweiten Drehstellungsbereichs, und ein Inkrementieren eines Zählers im Fall einer Signaländerung. Im Fall einer Änderung (nur) eines der beiden Signale wird der Zähler um einen einfachen Betrag, und im Fall einer Änderung beider Signale um einen zumindest im Wesentlichen zweifachen Betrag, inkrementiert.

Die Inkrementierung um den einfachen Betrag kann sowohl ein positives als auch ein negatives Inkrement einschließen, wobei im Fall der Änderung nur eines der beiden Signale ein einer Richtung der Drehbewegung entsprechendes Vorzeichen der Inkrementierung auf Grundlage der Änderung des geänderten Signals in Verbindung mit dem unveränderten Signal bestimmt wird. Im Fall der Änderung der beiden Signale kann der Zähler mit einem fest vorbestimmten Vorzeichen inkrementiert werden.

Das erste und zweite Signal kann mit einem zugeordneten ersten Schwellwert bzw. zweiten Schwellwert verglichen werden und ein Ergebnis des Vergleichs kann in ein erstes Logiksignal bzw. zweites Logiksignal umgesetzt werden. Für eine hysteretische Umsetzung kann der erste und zweite Schwellwert eine Funktion des ersten bzw. zweiten Logiksignals sein. Alternativ kann ein einheitlicher (Basis-)Schwellwert für die (hysteretische) Umsetzung sowohl des ersten als auch des zweiten Sensorsignals eingesetzt werden.

Gemäß einem noch weiteren Aspekt ist die Aufgabe durch ein Computerprogrammprodukt gelöst, das Anweisungen umfasst, die einen Mikroprozessor zur Ausführung der Schritte eines der vorstehend genannten Verfahren zu veranlassen vermögen.

**Kurze Beschreibung der Figuren**

Weitere Merkmale und Vorteile der Offenbarung werden nachstehend anhand die Erfindung nicht beschränkender Ausführungsbeispiele unter Bezugnahme auf die beigefügten Figuren beschrieben. Es zeigen:

Fig. 1 schematisch ein Zusammenwirken zwischen einem Sensor und einem Drehelement,

Fig. 2 schematisch einen Verlauf eines analogen Sensorsignals in Abhängigkeit von einer Drehwinkelstellung,

Fig. 3 ein Blockschaltbild zum Umsetzen des analogen Sensorsignals in ein digitales Logiksignal in Abhängigkeit von einem Schwellwert,

Fig. 4 schematisch einen Verlauf des Logiksignals in Abhängigkeit von einer Drehstellung für verschiedene Schwellwerte,

Fig. 5 schematisch ein Zusammenwirken zweier Sensoren mit einem Drehelement,

Fig. 6 schematisch eine Folge eines erfassten ersten Signals und eines erfassten zweiten Signals,

Fig. 7 eine Zuordnung zwischen dem erfassten ersten und zweiten Signal und einem Inkrement der Drehbewegung,

Fig. 8 eine einem Sensor zugeordnete Sensorselektronik,

Fig. 9 eine Zuordnung zwischen zwei aufeinanderfolgenden Abtastungen zweier Sensoren und einem Inkrement der Drehbewegung gemäß dem Stand der Technik,

Fig. 10 schematisch eine Quadraturerkennung bei nicht idealem Schwellwert,

Fig. 11 ein erstes Ausführungsbeispiel einer Vorrichtung zur Erfassung einer Drehbewegung,

Fig. 12 eine erste Zuordnung, die einem regelmäßig erfassten ersten Signal und einem bedingt erfassten zweiten Signal ein Inkrement der Drehbewegung zuordnet gemäß dem ersten Ausführungsbeispiel,

Fig. 13A    schematisch einen kontinuierlichen Verlauf eines analogen Sensorsignals und dessen Umsetzung in ein digitales Logiksignal auf Grundlage eines Schwellwerts,

Fig. 13B    schematisch einen kontinuierlichen Verlauf eines analogen Sensorsignals und dessen Umsetzung in ein digitales Logiksignal auf Grundlage zweier verschiedener Schwellwerte für ein hysteretisches Schaltverhalten,

Fig. 14    eine einem Sensor zugeordnete Sensorelektronik mit hysteretischem Schaltverhalten,

Fig. 15    ein Zusammenwirken von vier Sensoren mit einem Drehelement,

Fig. 16    eine einem Sensorpaar zugeordnete Sensorelektronik zur Schwellwertbestimmung,

Fig. 17    ein Blockschaltbild einer Ausführungsform einer Vorrichtung zur Erfassung einer Drehbewegung mit Schwellwertbestimmung,

Fig. 18    einen Schaltkreis zur Erzeugung eines Schwellwerts,

Fig. 19    ein zweites Ausführungsbeispiel einer Vorrichtung zur Erfassung einer Drehbewegung,

Fig. 20    eine zweite Zuordnung, die zwei aufeinanderfolgenden Abtastungen ein Inkrement der Drehbewegung zuordnet gemäß dem zweiten Ausführungsbeispiel, und

Fig. 21    eine dritte Zuordnung, die drei aufeinanderfolgenden ersten Signalen und einem bedingten zweiten Signal ein Inkrement der Drehbewegung zuordnet gemäß einem dritten Ausführungsbeispiel.

## Ausführliche Beschreibung

Im Nachfolgenden sind für den Fall einer unmittelbar vorausgehenden Änderung des ersten Signals oder für den Fall von unmittelbar aufeinanderfolgenden Änderungen des ersten Signals Merkmale, Komponenten, Vorgehensweisen oder Verfahrensschritte beschrieben. Alternativ oder ergänzend können entsprechende Merkmale, Komponenten, Vorgehensweisen und Verfahrensschritt (in gleicher Weise) bei einer vorausgehenden Änderung innerhalb der Maximalzeit, wie vorstehend beschrieben, angewendet oder eingesetzt werden.

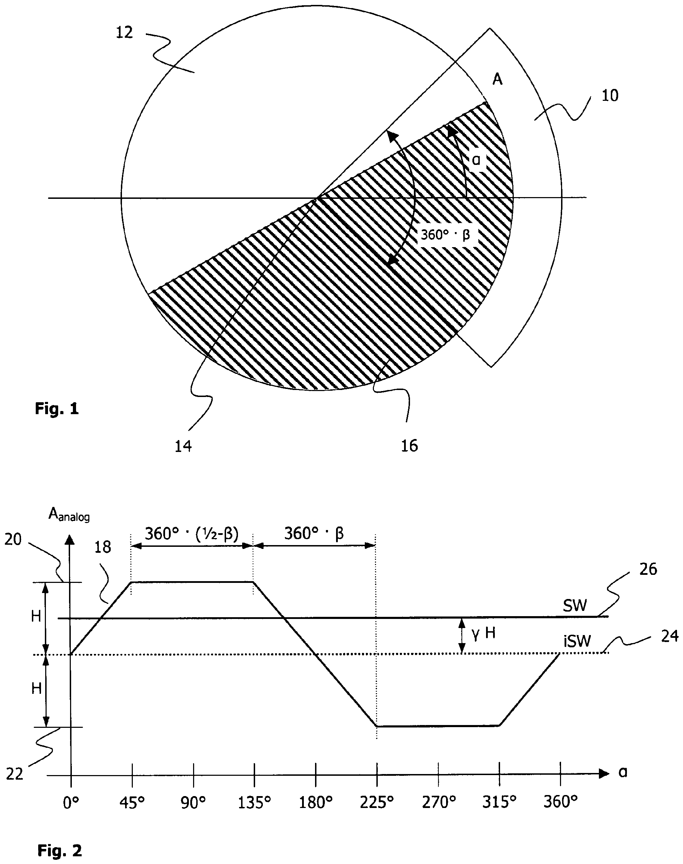

Nachstehend ist unter Bezugnahme auf die Fign. 1 bis 4 eine Erzeugung eines Logiksignals grundsätzlich beschrieben. Fig. 1 zeigt einen ersten Sensor 10, der zur kapazitiven oder induktiven Wechselwirkung mit einem Drehelement 12 ausgebildet ist. Der Sensor 10 ist im Wesentlichen parallel zu einer Drehebene des Drehelements 12 außerhalb einer Drehachse 14 des Drehelements 12 stationär angeordnet.

Der Sensor 10 ist dazu ausgebildet, in einem 360° · ß umfassenden Sensorsegment eine metallische Beschichtung 16 des Drehelements 12 kapazitiv oder induktiv zu erfassen. Der Sensor 10 vermag in Abhängigkeit von einer Drehstellung $\alpha$ des Drehelements 12 bezüglich des stationären Sensors 10 ein analoges Sensorsignal $A_{analog}$ zu erzeugen. Im gezeigten Ausführungsbeispiel deckt das empfindliche Sensorsegment ein Kreisviertel (ß = 1/4) ab.

Fig. 2 zeigt schematisch einen Verlauf 18 des vom Sensor 10 erzeugten analogen Sensorsignals $A_{analog}$ in Abhängigkeit von der Drehstellung $\alpha$. Das analoge Sensorsignal $A_{analog}$ ist in Fig. 2 näherungsweise als Maß für eine Überdeckung des empfindlichen Sensorsegments der Winkelbreite 360° · ß durch die metallische Beschichtung 16 des Drehelements 12 dargestellt. Die Drehstellung des Winkels $\alpha$ = 0° ist dabei als eine 50%ige Überdeckung des empfindlichen Sensorsegments durch die metallische Beschichtung 16 gewählt, und ein Vorzeichen des analogen Sensorsignals $A_{analog}$ ist so gewählt, dass mit wachsender Überdeckung des empfindlichen Sensorsegments durch die metallische Beschichtung 16 das analoge Sensorsignal $A_{analog}$ ansteigt.

Für den dargestellten Fall mit ß = 1/4 steigt im Drehstellungsbereich von 315° bis 45° (= 405° modulo 360°) entsprechend einer von 0% bis 100% zunehmenden Überdeckung das analoge Sensorsignal $A_{analog}$ an. Im Drehstellungsbereich von 45° bis 135° liegt eine hundertprozentige Überdeckung vor. Für ein Sensorsegment der allgemeinen Winkelbreite 360° · ß liegt eine hundertprozentige Überdeckung in einem Drehbestellungsbereich der Winkelbreite 360° · (1/2 - ß) vor. In einem Winkelbereich von 135° bis 225° fällt das analoge Sensorsignal $A_{analog}$ von einem Maximum 20 auf ein Minimum 22 entsprechend einem Rückgang von 100% auf 0% Überdeckung des empfindlichen Sensorsegments durch die metallische Beschichtung 16 ab. Für ein Sensorsegment der allgemeinen Winkelbreite 360° · ß beträgt eine Winkelbreite eines (sowohl steigenden als auch fallenden) Übergangsbereichs zwischen Maximum 20 und Minimum 22 des analogen Sensorsignals $A_{analog}$ (entsprechend der Winkelbreite des empfindlichen Sensorsegments) 360° · ß. Im Drehstellungsbereich von 225° bis 315° nimmt das analoge Sensorsignal $A_{analog}$ im Wesentlichen das Minimum 22 an. Für ein empfindliches Sensorsegment der allgemeinen Winkelbreite 360° · ß beträgt eine Winkelbreite des Minimumbereichs wiederum 360° · (1/2 - ß).

Der in Fig. 2 gezeigte Verlauf 18 des analogen Sensorsignals $A_{analog}$ ist insbesondere insofern schematisch, als die jeweiligen Winkelbreiten des Maximumbereichs und des Minimumbereichs verschieden sein können, und die Übergangsbereiche zwischen dem Maximumbereich und dem Minimumbereich nicht-linear sein können.

In Fig. 2 ist ein idealer Schwellwert 24 durch eine gepunktete Linie eingezeichnet, der mittig zwischen dem Maximum 20 und dem Minimum 22 des analogen Sensorsignals $A_{analog}$ liegt. Das Maximum 20 des analogen Sensorsignals liegt um einen Signalhub H über und das Minimum des analogen Sensorsignals $A_{analog}$ um einen Signalhub H unter dem idealen Schwellwert 24. Im Fall unterschiedlicher Winkelbreiten des Maximalbereichs und des Minimalbereichs kann der ideale Schwellwert ein mit den jeweiligen Winkelbreiten gewichtetes Mittel sein. Des Weiteren ist in Fig. 2 ein um $\gamma$ H (mit $|\gamma|<1$) vom idealen Schwellwert abweichender realer Schwellwert 26 eingezeichnet. Die Abweichung vom idealen Schwellwert kann beispielsweise durch eine werkseitig nicht (oder ungenau) justierte Voreinstellung des realen Schwellwerts 26 oder durch eine zeitliche Drift des analogen Sensorsignals $A_{analog}$ verursacht sein. Eine solche Signaldrift kann beispielsweise mit einer abfallenden Versorgungsspannung einer den Sensor 10 betreibenden Batterie oder einer veränderlichen Temperatur einhergehen. Auch können äußere elektrische oder magnetische Felder Ursache für die Abweichung des realen Schwellwerts 26 vom idealen Schwellwert 24 sein.

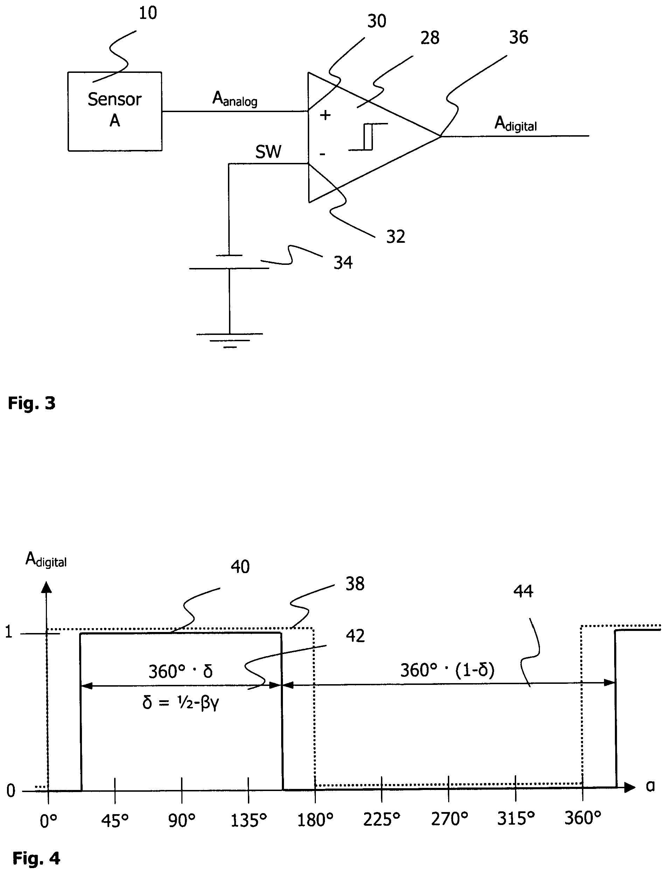

Fig. 3 zeigt eine Umsetzung des vom Sensor 10 erzeugten analogen Sensorsignals $A_{analog}$ in ein digitales Logiksignal $A_{digital}$ mittels eines Komparators 28. Der Komparator 28 vergleicht das an einem ersten Eingang 30 anliegende analoge Sensorsignal $A_{analog}$ mit einem an einem zweiten Eingang 32 anliegenden Spannungspegel eines Schwellwerts SW, der durch eine Spannungsquelle 34 bezüglich eines Erdungspotentials fest vorgegeben ist. Überschreitet das analoge Sensorsignal $A_{analog}$ den Schwellwert SW gibt ein Ausgang 36 des Komparators 28 einen einem gesetzten Bit ("1") entsprechenden Spannungspegel (beispielsweise gleich der Versorgungsspannung) als digitales Logiksignal $A_{digital}$ aus. Unterschreitet dagegen das analoge Sensorsignal $A_{analog}$ den Schwellwert SW, gibt der Ausgang 36 des Komparators 28 einen einem gelöschten Bit ("0") entsprechenden Spannungspegel (beispielsweise gleich dem Erdungspotential) als digitales Logiksignal $A_{digital}$ aus.

Fig. 4 zeigt schematische Verläufe 38 und 40 des vom Komparator 28 ausgegebenen digitalen Logiksignals $A_{digital}$ in Abhängigkeit von der Drehstellung $\alpha$. Ein idealer Verlauf 38 entspricht einem bei idealem Schwellwert ausgegebenen digitalen Logiksignal $A_{digital}$ mit einer positiven Flanke (Übergang von 0 auf 1) bei einer Drehstellung $\alpha$ = 0° und einer negativen Flanke (Übergang von 1 auf 0) bei einer Drehstellung von $\alpha$ = 180°. Der Verlauf 40 resultiert bei dem in Fig. 2 gezeigten realen Schwellwert 26. Durch die Abweichung $\gamma$H des realen Schwellwerts 26 gegenüber dem idealen Schwellwert 24 kommt es zu einer Verschiebung der Flanken des digitalen Logiksignals $A_{digital}$ im Verlauf 40. Gezeigt ist das Beispiel einer 50%igen Überhöhung ($\gamma$ = 0,5), bei dem die positive Flanke um 22,5° in positiver Drehrichtung und die negative Flanke um 22,5° in negativer Drehrichtung verschoben ist. Dadurch wird ein dem gesetzten Logiksignal ($A_{digital}$ = 1) entsprechender Status auf einen Drehstellungsbereich der Winkelbreite 360° · $\delta$ = 135° im Verlauf 40, statt einer idealen Winkelbreite von 180° im Verlauf 38, verkürzt. Ein dem gelöschten Logiksignal ($A_{digital}$ = 0) entsprechender Status ist auf einen Drehstellungsbereich der Breite 360° · (1 - 5) = 225° verbreitert. Modellhaft gilt für ein Sensorsegment der allgemeinen Winkelbreite 360° · $\beta$ und eine relative Abweichung $\gamma$ des realen Schwellwerts 26 gegenüber dem idealen Schwellwert 24 bezogen auf den Signalhub H, dass der dem gesetzten Logiksignal ($A_{digital}$=1) entsprechende Drehstellungsbereich 42 eine Winkelbreite von 360° · $\delta$ mit $\delta$ = ½ - $\beta\gamma$ aufweist, und der dem gelöschten Logiksignal ($A_{digital}$=0) entsprechende Drehstellungsbereiche 44 eine Winkelbreite von 360° · (1 - $\delta$) aufweist.

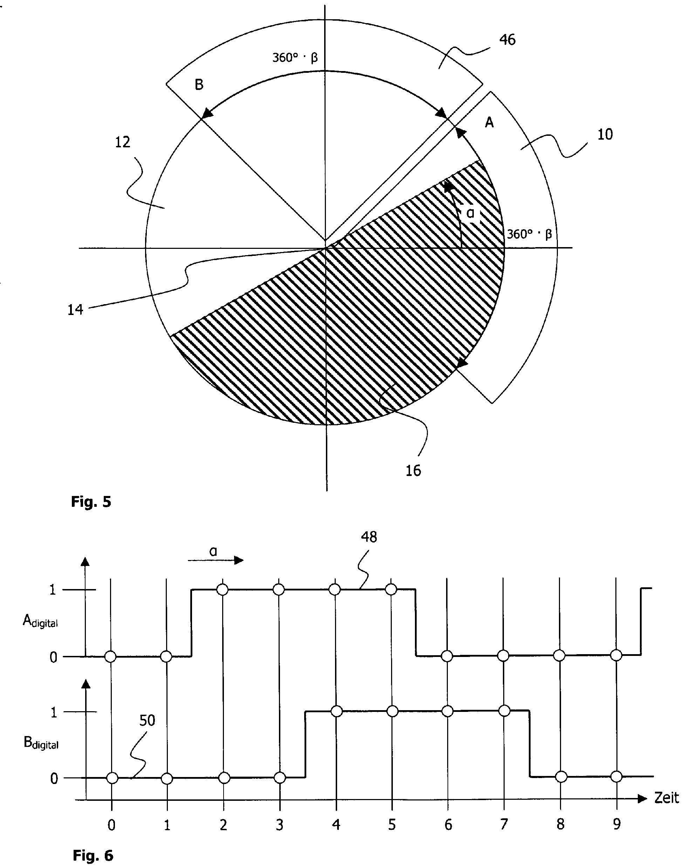

Nachfolgend ist anhand der Fign. 5 bis 9 eine Quadraturtechnik zur Erkennung einer Drehrichtung grundsätzlich beschrieben. Fig. 5 zeigt zwei Sensoren 10 und 46 mit jeweils in Drehrichtung zueinander um 90° drehversetzten empfindlichen Sensorsegmenten A und B, die dazu ausgebildet sind, voneinander unabhängig mit der metallischen Beschichtung 16 des Drehelements 12 zusammenzuwirken.

In einem bevorzugten Ausführungsbeispiel ist eine Geberspule (nicht gezeigt) zur Drehachse 14 zentriert stationär angeordnet. Die Geberspule ist zur Erzeugung eines Magnetfelds in Richtung des Drehelements (mit Feldlinien im Wesentlichen parallel der Drehachse) ausgerichtet und wird zur Signalerfassung gepulst bestromt (mit einer sehr kurzen Pulsdauer von beispielsweise 50 ns). In den empfindlichen Sensorsegmenten A und B weist der Sensor 10 bzw. 46 jeweils eine Empfängerspule (nicht gezeigt) auf. Das Drehelement weist einen zur Drehachse 14 zentrierten ersten elektrisch leitenden Abschnitt (nicht gezeigt) auf, welcher der Geberspule zugewandt ist. Ein zweiter elektrisch leitender Abschnitt (beispielsweise die metallische Beschichtung 16 ausreichender Dicke) erstreckt sich über einen halben Umfang des Drehelements und ist mit dem ersten elektrisch leitenden Abschnitt leitend verbunden. Das Magnetfeld der Geberspule induziert im ersten leitenden Abschnitt Kreis- und Wirbelströme, die sich über die leitende Verbindung zum zweiten elektrisch leitenden Abschnitt ausbreiten und ein magnetisches Gegenfeld erzeugen. Das Gegenfeld moduliert am Ort der Empfängerspule das Magnetfeld der Geberspule in Abhängigkeit von der momentanen Drehstellung des Drehelements. Das modulierte Magnetfeld induziert in der Empfängerspule ein Spannungssignal $A_{analog}$ bzw. $B_{analog}$. Eine solche Strompuls-Kopplung ist durch Feuchtigkeit (wie Spritz- oder Kondenswasser) weit weniger störanfällig (als beispielsweise eine kapazitive Kopplung). Während die Kopplung über Magnetfelder durch eine von Eins um weniger als 0,01 Promille abweichende Permeabilitätszahl des Wassers kaum beeinflusst wird, unterliegt ein elektrisches Feld der kapazitiven Kopplung einer hohen Permittivitätszahl des Wassers von über 80.

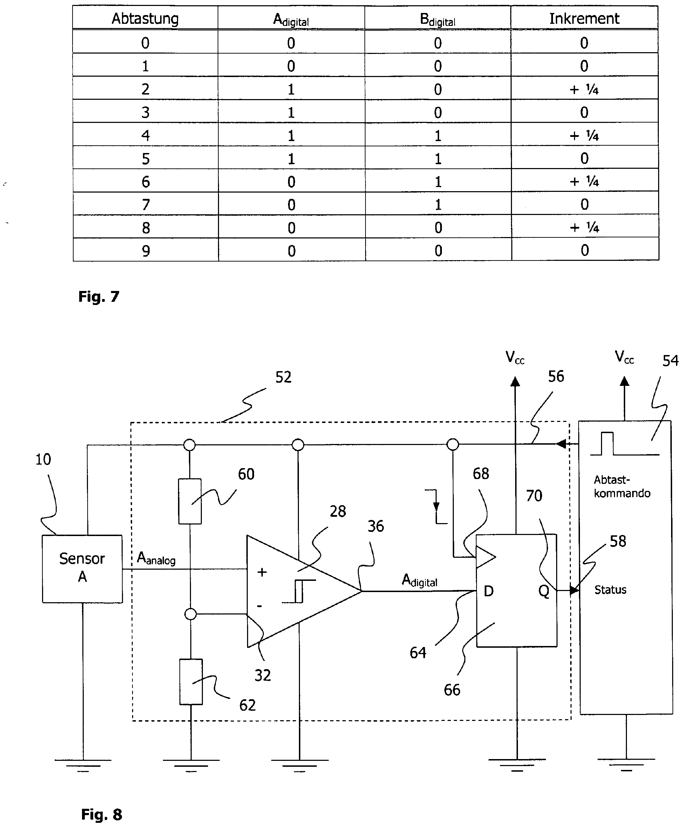

Fig. 6 zeigt schematische Verläufe 48 und 50 des ersten digitalen Logiksignals des ersten Sensors 10 bzw. eines zweiten digitalen Logiksignals $B_{digital}$ des zweiten Sensors 46 als Funktion der Zeit im Fall einer Drehbewegung in positiver Drehrichtung. Die Quadraturerkennung basiert auf einem aus dem ersten Logiksignal $A_{digital}$ und dem zweiten Logiksignal $B_{digital}$ gebildeten, zwei Bit umfassenden Zustand ($A_{digital}$, $B_{digital}$) entsprechend den vier Quadranten einer Vollumdrehung mit einer Zustandsfolge 00, 10, 11 und 01. Die in Fig. 6 gezeigte Drehbewegung in positiver Drehrichtung ist durch das dem zweiten digitalen Logiksignals $B_{digital}$ um 90° vorauseilende erste digitale Logiksignal $A_{digital}$ erfassbar. Um Übergänge zwischen den vier Zuständen zu zählen, wird regelmäßig ein den Zustand repräsentierendes Signalpaar ($A_{digital}$, $B_{digital}$) erfasst. Den in Fig. 6 gezeigten Abtastungen 0 bis 9 entsprechen die in Fig. 7 gezeigten Signalpaare ($A_{digital}$, $B_{digital}$), denen bei jedem Übergang von einem jeweils einen Quadranten repräsentierenden Zustand zu einem nächsten Zustand ein Inkrement "+½" zur Aktualisierung eines Zählerstands der Drehbewegung zugeordnet ist.

So tritt zwischen den Abtastungen 1 und 2 im in den Fign. 6 und 7 gezeigten Beispiel eine positive Flanke im ersten digitalen Logiksignal $A_{digital}$ bei unveränderten zweiten digitalen Logiksignal $B_{digital}$ = 0 auf. Diese Flanke entspricht (zumindest bei idealem Schwellwert) einem Nulldurchgang der Drehstellung ($\alpha$ = 0). Zwischen der dritten und vierten Abtastung tritt bei unverändertem ersten digitalen Logiksignal $A_{digital}$ = 1 eine positive Flanke im zweiten digitalen Logiksignal $B_{digital}$ auf, die zumindest im Wesentlichen der Drehstellung $\alpha$ = 90° entspricht. Zwischen der fünften und sechsten Abtastung tritt bei unverändertem zweiten digitalen Logiksignal $B_{digital}$ = 1 eine negative Flanke im ersten digitalen Logiksignal $A_{digital}$ auf, die zumindest im Wesentlichen der Drehstellung $\alpha$ = 180° entspricht. Zwischen der siebten und achten Abtastung tritt bei unverändertem ersten digitalen Logiksignal $A_{digital}$ = 0 eine negative Flanke im zweiten digitalen Logiksignal $B_{digital}$ auf, die zumindest im Wesentlichen der Drehstellung $\alpha$ = 270° entspricht.

Fig. 8 zeigt eine dem Sensor 10 zugeordnete Sensorelektronik 52, die von einer Ablaufsteuerung 54 durch ein Abtastkommando 56 gesteuert wird zum gepulsten Betrieb des Sensors 10 und des Komparators 28. Die Sensorelektronik 52 umfasst einen ersten Widerstand 60 und einen zweiten Widerstand 62, die eine Widerstandsbrücke bilden. Der erste Widerstand 60 ist einerseits mit dem Abtastkommando 56 beaufschlagt und andererseits mit dem Eingang 32 des Komparators 28 verbunden. Der zweite Widerstand 62 ist einerseits mit dem Schwellwerteingang 32 des Komparators 28 und andererseits mit dem Erdungspotential verbunden. Aus einem Verhältnis des ersten Widerstands 60 und des zweiten Widerstands 62 ergibt sich (bei im Wesentlichen stromlosem Schwellwerteingang 32) ein Spannungspegel des Schwellwerts SW von $U_{56} R_{62} / (R_{60}+R_{62})$ als ein Bruchteil einer Spannung $U_{56}$ des Abtastkommandos 56, wobei $R_{60}$ und $R_{62}$ den Widerständen 60 bzw. 62 entsprechende Widerstandswerte bezeichnen. Der Ausgang 36 des Komparators 28 ist mit dem Eingang 64 eines taktflankengesteuerten D-Flipflops 66 verbunden ist, dessen Takteingang 68 vom Abtastkommando 56 spannungsbeaufschlagt ist. Der Sensor 10 und der Komparator 28 werden nur durch einen Spannungspuls des Abtastkommandos 56 mit Betriebsspannung versorgt. Die Sensorelektronik 52 gibt (an die Ablaufsteuerung 54) ein der letzten Abtastung entsprechendes Statussignal 58 des D-Flipflops 66 aus.

Das Abtastkommando 56 ist ein Rechtecksignal mit einer (einer Einschaltdauer des Sensors 10 und des Komparators 28 entsprechenden) Pulsdauer von 1 $\mu$s bis 100 $\mu$s, vorzugsweise 10 $\mu$s, und einer (der Betriebsspannung des Sensors 10 und der Sensorelektronik 52 entsprechenden) Pulshöhe. Der D-Flipflop 66 ist mit einer permanenten Versorgungsspannung $V_{cc}$ verbunden und stellt an seinem Ausgang 70 das bei jeder abfallenden Flanke des Abtastkommandos 56 am Eingang 64 erhaltene digitale Logiksignal $A_{digital}$ auch nach der Pulsdauer des Abtastkommandos 56 dauerhaft als Statussignal 58 (für die Ablaufsteuerung 54) bereit.

Eine weitere der (in Fig. 8 für den ersten Sensor 10 gezeigten) Sensorelektronik 52 entsprechende Sensorelektronik 52 ist in elektrischer Verbindung mit dem zweiten Sensor 46 vorhanden.

In einem kostengünstigeren Ausführungsbeispiel ist eine gemeinsame Sensorelektronik 52 vorgesehen, und beim Erfassen des die zwei Bit des ersten Logiksignals $A_{digital}$ und des zweiten Logiksignals $B_{digital}$ umfassenden Zustands ($A_{digital}$, $B_{digital}$) werden der erster Sensor 10 und zweiter Sensor 46 in kurzer Abfolge jeweils mit der Sensorelektronik 52 verbunden und über ein entsprechendes Abtastkommando 56 ausgelesen. Ein Zeitabstand einer solchen sequentiellen Abtastung des ersten Sensors 10 und des zweiten Sensors 46 ist so kurz gewählt, dass sich zwischen den beiden sequentiellen Abtastungen das Drehelement nur um einen für die Quadraturerkennung unwesentlichen Drehwinkel $\Delta\alpha$ = 360° · $\Delta t$ · $f_{max}$ dreht. Bei einer maximalen Drehzahl von $f_{max}$ = 50 Umdrehungen pro Sekunden und einem Zeitabstand von höchstens $\Delta t$ = 100 $\mu$s beträgt der Drehwinkelversatz höchstens $\Delta\alpha$ = 1,8°. Eine Gesamtabtastzeitfolge umfasst das zeitlich eng benachbarte sequentielle Abtastpaar für den ersten und zweiten Sensor 10, 46 im Zeitabstand $\Delta t$ von höchstens 100 $\mu$s, wobei die Abtastpaare in einer Größenordnung von 1 ms, vorzugsweise von 1,0 ms bis 1,5 ms, aufeinander folgen.

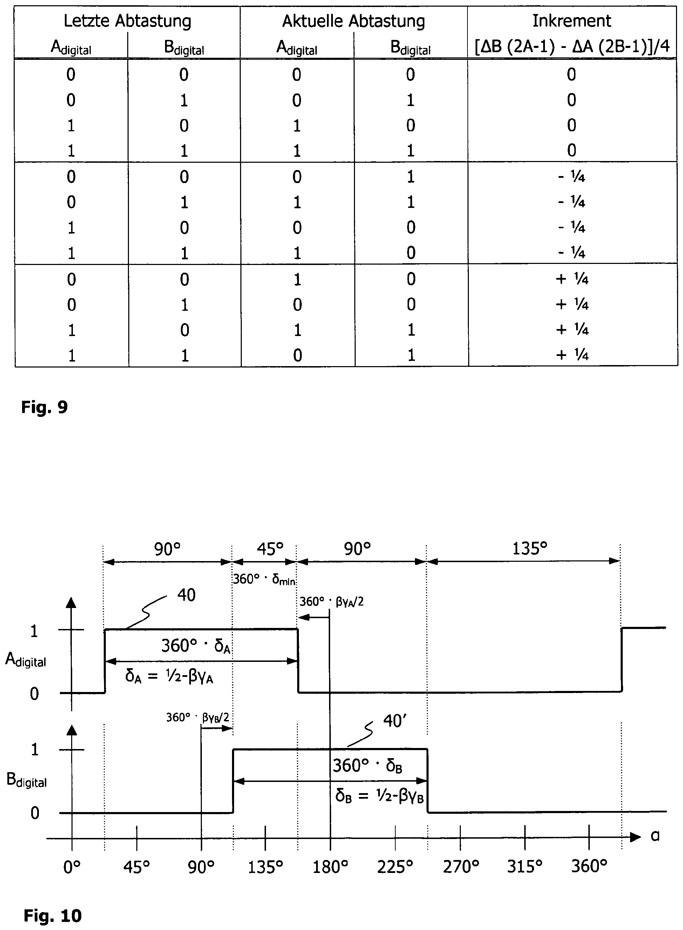

Aus der Folge der Zustände ($A_{digital}$, $B_{digital}$) kann bei jeder Zustandsänderung eine Viertelumdrehung der Drehbewegung einschließlich der Richtung der Drehbewegung bestimmt werden. Die Zustandsfolge wird mittels der in Fig. 9 gezeigten Zuordnung zwischen dem letzten Zustand und dem aktuellen Zustand einerseits und einem Inkrement eines Zählerstands der Drehbewegung andererseits dekodiert. Die ersten vier Zeilen der in Fig. 9 gezeigten Dekodiertabelle betreffen den Fall eines unveränderten Zustands ($A_{digital}$, $B_{digital}$). Die letzten vier Zeilen der Dekodiertabelle entsprechen den vier Zustandsänderungen einer Drehbewegung in positiver Drehrichtung wie vorstehend unter Bezugnahme auf die Fign. 6 und 7 beschrieben. Die mittleren vier Zeilen entsprechen den vier Zustandsänderungen bei einer Drehbewegung in negativer Drehrichtung, die durch ein dem ersten Logiksignal $A_{digital}$ vorauseilendes zweites Logiksignal $B_{digital}$ erfassbar sind.

Während bei einem idealen Schwellwert 24 und einer bekannten maximalen Drehzahl $f_{max}$ zur zuverlässigen Abtastung der vier Quadranten je Umdrehung gemäß Abtasttheorem eine Abtastrate von $f_{Abtastung} = 4f_{max}$ erforderlich wäre, ist aufgrund des vom idealen Schwellwert 24 abweichenden realen Schwellwerts 26 eine noch höhere Abtastrate erforderlich. Fig. 10 zeigt den vorstehend beschriebenen Verlauf 40 des dem ersten Sensor 10 zugeordneten ersten Logiksignals $A_{digital}$ in Verbindung mit einem Verlauf 40' des zweiten Logiksignals $B_{digital}$ zur Quadraturerkennung. Wie Fig. 10 zu entnehmen ist, verschiebt sich die idealerweise bei der Drehstellung $\alpha = 90°$ auftretende positive Flanke im zweiten Logiksignals $B_{digital}$ um $360° \cdot \beta\gamma_B/2$ zu einem größeren Drehwinkel und die idealerweise bei der Drehstellung $\alpha = 180°$ auftretende negative Flanke im ersten Logiksignal $A_{digital}$ um $360° \cdot \beta\gamma_A/2$ zu einem kleineren Drehwinkel. Dies hat zur Folge, dass (im Fall eines gegenüber dem idealen Schwellwert 24 erhöhten realen Schwellwerts 26, d.h. $\gamma_A$, $\gamma_B > 0$) der Zustand ($A_{digital}$, $B_{digital}$) = (1,1) von einem idealerweise 90° umfassenden Winkelbereich auf eine Winkelbreite von $360° \cdot \delta_{min}$ mit $\delta_{min} = ¼ - \beta (|\gamma_A|+|\gamma_B|)/2$ verkürzt ist. Im vorliegenden Beispiel eines um 50% abweichenden Schwellwert (für sowohl das den ersten Sensor 10 als auch den zweiten Sensor 46, d.h. $\gamma_A = \gamma_B = 0,5$), umfasst der den Zustand ($A_{digital}$, $B_{digital}$) = (1,1) repräsentierende Winkelbereich nur 45° statt der idealen 90°. Um auch diesen verkürzten Zustand zuverlässig erfassen zu können, muss die Abtastrate auf $f_{Abtastung} = 8f_{max}$ verdoppelt werden. Im Rahmen des schematischen Modells der Fign. 2, 4 und 10 beträgt die erforderliche Abtastrate allgemein

$$f_{Abtastung} = \frac{4}{1 - 2\beta(|\gamma_A| + |\gamma_B|)} f_{max} > 4f_{max} \cdot \qquad (1)$$

Mit einer solch hohen Abtastrate beider Sensoren ist selbst bei gepulstem Betrieb der Sensoren 10, 46 und der zugeordneten Sensorelektronik 52 eine für eine über mindestens 10 Jahre autonome Stromversorgung hohe Kapazitätsanforderung an eine Batterie verbunden, die sich nachteilig auf Gestehungskosten, Wartung und Baugröße auswirkt.

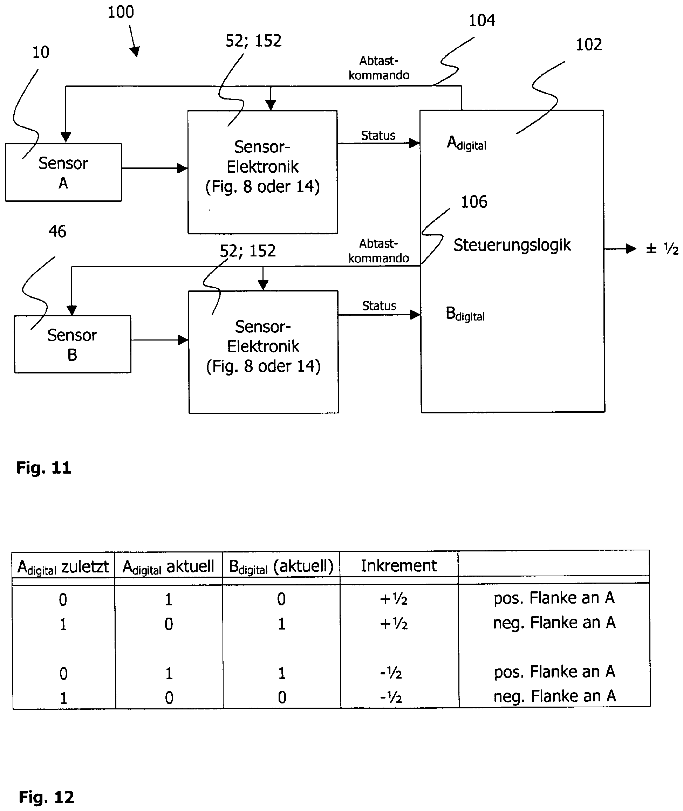

Fig. 11 zeigt ein erstes Ausführungsbeispiel einer allgemein mit 100 bezeichneten Vorrichtung zur Erfassung einer Drehbewegung, die einen geringeren Strombedarf aufweist. Die Vorrichtung umfasst die Sensoren 10 und 46, denen jeweils eine Sensorelektronik 52 zugeordnet ist. Eine Steuerungslogik 102 gibt zur Erfassung des den ersten Drehstellungsbereich angebenden ersten Logiksignals $A_{digital}$ ein erstes Abtastkommando 104 an den ersten Sensor 10 und dessen Sensorelektronik 52 aus. Die dem ersten Sensor 10 zugeordnete Sensorelektronik 52 gibt an die Steuerungslogik 102 ein dem erfassten ersten Logiksignal $A_{digital}$ entsprechendes erstes Statussignal $A_{digital}$ aus. Ferner gibt die Steuerungslogik 102 ein unabhängiges zweites Abtastkommando 106 an den zweiten Sensor 46 und dessen Sensorelektronik 52 aus und erhält ein dieser Abtastung des zweiten Sensors 46 entsprechendes zweites Statussignal $B_{digital}$.

Die Steuerungslogik 102 umfasst einen (nicht gezeigten) Mikroprozessor und einen (nicht gezeigten) mit diesem verbundenen Speicher, vorzugsweise einen Nur-LeseSpeicher (ROM), der eine in Fig. 12 gezeigte erste Dekodiertabelle enthält.

Die Steuerungslogik 102 ist dazu ausgebildet, regelmäßig einen Rechteckpuls als erstes Abtastkommando 104 an den ersten Sensor 10 und die diesem zugeordnete Sensorelektronik 52 auszugeben mit einer Abtastrate $f_{Abtastung}$ (gemäß Gleichung (1)). Insbesondere kann, beispielsweise wenn konstruktiv sichergestellt ist, dass eine relative Abweichung des Schwellwerts 26 höchstens 50% des Signalhubs H beträgt ($|\gamma_A|,|\gamma_B| \leq 0,5$) und die Sensoren 10 und 46 jeweils ein Kreisviertel ($\beta = ¼$) erfassen, die Abtastrate $f_{Abtastung} = 8 f_{max}$ betragen.

Die Steuerungslogik 102 speichert zumindest das zuletzt (und allgemein die letzten N) erfasste(n) erste(n) Logiksignal(e) $A_{digital}$ und gibt einen Rechteckpuls als unabhängiges zweites Abtastkommando 106 aus, falls ein Vergleich zwischen dem gespeicherten ersten Logiksignal $A_{digital}$ und einem aktuell erfassten ersten Logiksignal $A_{digital}$ einen Änderung ergibt. Im Fall der Änderung wird in unmittelbarer zeitlicher Nähe, vorzugsweise höchstens 100 μs nach der aktuellen Erfassung des ersten Logiksignals $A_{digital}$, das zweite Abtastkommando 106 ausgegeben. Gemäß der in Fig. 12 gezeigten Zuordnung bestimmt die Steuerungslogik 102 auf Grundlage des (gespeicherten) zuletzt erfassten ersten Logiksignals $A_{digital}$ und des aktuell erfassten ersten Logiksignals $A_{digital}$ in Verbindung mit dem (aktuell) erfassten zweiten Logiksignal $B_{digital}$ ein Inkrement +1/2 oder -1/2. Das Inkrement repräsentiert die Drehbewegung unter Berücksichtigung der Drehrichtung. Das Vorzeichen des Inkrements kann gemäß der in Fig. 12 gezeigten ersten Dekodiertabelle rein logisch aus den erfassten Logiksignalen bestimmt werden. Alternativ kann (auch ohne Speicherung eines zuletzt erfassten ersten Logiksignals $A_{digital}$) der Änderung des ersten Logiksignals $A_{digital}$ eine positive oder negative Flanke zugeordnet werden und das Vorzeichen des Inkrements aus dem Vorzeichen der Flanke multipliziert mit dem Vorzeichen (1 - 2 $B_{digital}$) bestimmt werden.

Die Steuerungslogik 102 gibt das bestimmte Inkrement an einen Zähler der Drehbewegung aus oder vermag einen Zähler der Drehbewegung entsprechend dem Inkrement zu aktualisieren. Der Zähler ist vorzugsweise ein nicht-flüchtiger Speicher, der einen Zählerstand als Ganzzahlwertes Z speichert, wobei der Zählerstand Z einer Anzahl von Z/2 erfassten Umdrehungen entspricht. Der die Anzahl an erfassten Halbumdrehungen repräsentierende Ganzzahlwert Z kann vorteilhafterweise durch eine Ganzzahlarithmetik implementiert sein, wobei der Zähler allein auf Grundlage des Vorzeichens des Inkrements inkrementiert wird.

In einer Anwendung der in Fig. 11 gezeigten Vorrichtung zur Erfassung einer Drehbewegung eines Drehelements eines Wasserzählers kann ein typischer Haushaltswasserzähler für einen Maximaldurchfluss von 5 m$^3$/h (Kubikmeter pro Stunde) konstruktiv ausgelegt sein. Würde ein solcher Hauswasserzähler kontinuierlich mit dem Maximaldurchfluss betrieben, würden pro Jahr annähernd 54.000 m$^3$/h gezählt werden. Demgegenüber liegt ein typischerweise von einem Haushaltswasserzähler erfasster jährlicher Wasserverbrauch in einer Größenordnung von 100 bis 200 m$^3$, so dass eine Nutzungsrate des Wasserzählers unter 0,5% liegt. Die Vorrichtung 100 erfasst im Regelfall des Stillstands nicht beide Sensoren 10 und 46, sondern bestromt den zweiten Sensor 46 und dessen Auswerteelektronik 52 nur bei einer Veränderung des regelmäßig erfassten ersten Logiksignals $A_{digital}$. Damit wird in über 99% der Abtastperioden nur ein Sensor und dessen zugeordnete Sensorselektronik statt der konventionell zwei Sensoren nebst zugeordneter Sensorelektroniken betrieben. Dadurch ist eine Verringerung des Strombedarfs auf Rund die Hälfte erreicht.

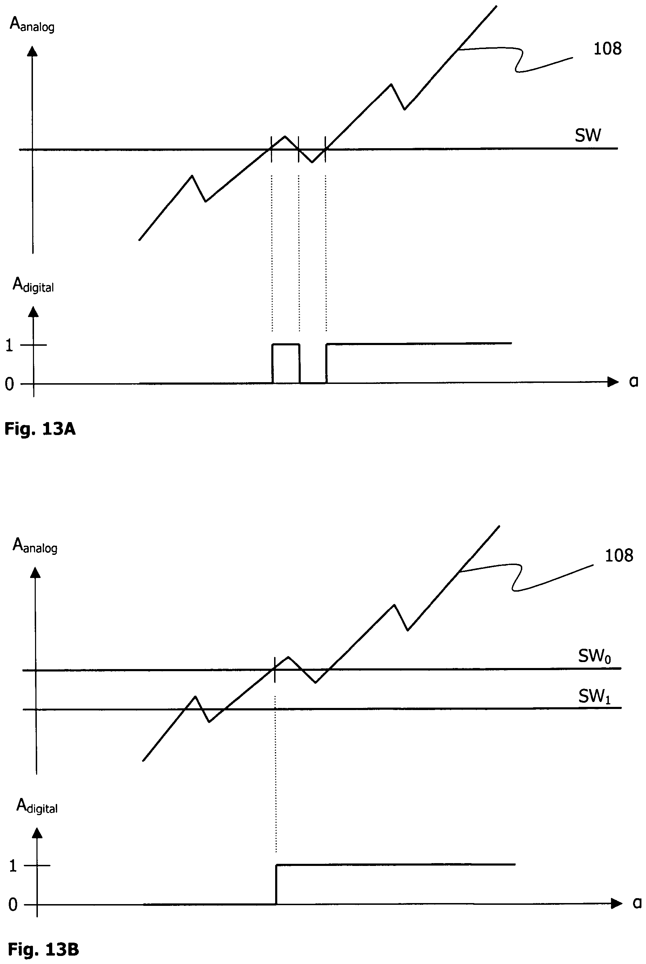

Fig. 13A zeigt einen Verlauf 108 eines (kontinuierlich erfassten) analogen Sensorsignals $A_{analog}$. Beispielsweise durch auf den ersten Sensor 10 einwirkende zeitabhängige äußere Störfelder oder durch ein Rauschen in der dem ersten Sensor 10 zugeordneten Sensorelektronik 52 ist das analoge Sensorsignal $A_{analog}$ rauschbehaftet. Insbesondere bei einem analogen Sensorsignal in einer Umgebung des Schwellwerts SW kann ein Übergangsflackern des digitalen Logiksignals $A_{digital}$ bei der Umsetzung (beispielsweise mittels eines Komparators 28 wie in Fig. 3 gezeigt) auftreten. Das Übergangsflackern kann durch eine in Fig. 13B gezeigte hysteretische Umsetzung des analogen Sensorsignals $A_{analog}$ in das digitale Logiksignal $A_{digital}$ vermieden werden. Für die hysteretische Umsetzung sind zwei Schwellwerte $SW_0$ und $SW_1$ vorgesehen. In einem ersten Ausführungsbeispiel der hysteretischen Umsetzung erfolgt eine Quantisierung (d.h. eine Zuordnung eines digitalen Logiksignals zu einem analogen Sensorsignal) bei ansteigendem analogem Sensorsignal $A_{analog}$ auf Grundlage des höheren Schwellwerts $SW_0$, und eine Quantisierung bei fallendem analogem Sensorsignal $A_{analog}$ auf Grundlage des niedrigeren Schwellwerts $SW_1$. Während beim ersten Ausführungsbeispiel der der Quantisierung zugrundegelegte Schwellwert vom analogen Sensorsignal $A_{analog}$ abhängt, bestimmt ein zweites Ausführungsbeispiel der Quantisierung den Schwellwert in Abhängigkeit vom digitalen Logiksignal $A_{digital}$. Das zweite Ausführungsbeispiel quantisiert das analoge Sensorsignal $A_{analog}$ auf Grundlage des höheren Schwellwerts $SW_0$, falls das (zuletzt erfasste) digitale Logiksignal $A_{digi-tal} = 0$ ist, und quantisiert das analoge Sensorsignal $A_{analog}$ auf Grundlage des niedrigeren Schwellwerts $SW_1$, falls das (zuletzt erfasste) digitale Logiksignal $A_{digital} = 1$ ist. Eine Differenz zwischen höherem Schwellwert $SW_0$ und niedrigerem Schwellwert $SW_1$ ist in Abhängigkeit von einer erfassten oder erwarteten Rauschamplitude gewählt. Unerwünschtes Übergangsflackern wie in Fig. 13A gezeigt, kann so verhindert werden.

Bei kontinuierlichem Betrieb des dem ersten Sensor 10 zugeordneten Komparators 28 ist die hysteretische Umsetzung des analogen Sensorsignals analog in das digitale Logiksignal $A_{digital}$ mittels eines (intrinsischen) hysteretischen Schaltverhaltens des Komparators 28 erreichbar. Bei gepulstem Betrieb des Komparators 28 ist dessen hysteretisches Schaltverhalten auf die kurze Pulsdauer beschränkt. Die Umsetzung der durch aufeinanderfolgende Abtastkommandos erfassten Sensorsignale ist nicht hysteretisch, da der Komparator 28 das letzte Logiksignal aufgrund der Abschaltung der Stromversorgung des Komparators 28 zwischen den Abtastkommandos "vergisst". Insbesondere ist bei einem für beide Sensoren 10 und 46 gemeinsam genutzten Komparator 28 keine hysteretische Umsetzung mittels eines intrinsisch hysteretischen Schaltverhalten des Komparators 28 erreichbar.

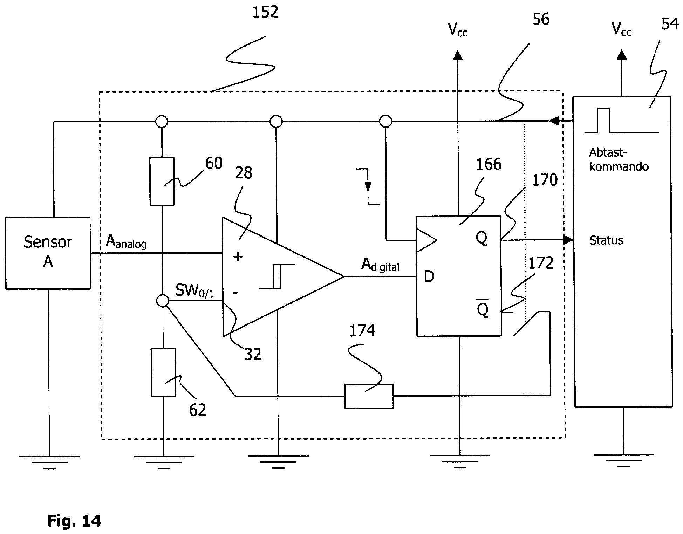

Fig. 14 zeigt eine gegenüber der Sensorelektronik 52 erweiterte Sensorelektronik 152, die eine hysteretische Umsetzung auch bei gepulstem Betrieb des Komparators 28 ermöglicht. Die Sensorelektronik 152 umfasst wie die Sensorelektronik 52 einen ersten Widerstand 60 und einen zweiten Widerstand 62, die bei der erweiterten Sensorelektronik 152 einen mittleren Basisschwellwert BSW definieren. Die Sensorelektronik 152 umfasst einen Komparator 28 und ein taktflankengesteuertes D-Flipflop 166, das neben dem Statusausgang 170 einen dazu logisch invertierten Ausgang 172 aufweist, der nur während der Pulsdauer des Abtastkommandos 56 mit dem Eingang 32 des Komparators 28 über einen weiteren Widerstand 174 verbunden ist. Ist der im D-Flipflop 166 gespeicherte, zuletzt erfasste Status Q = 1, bewirkt das dem invertierten Status $\overline{Q} = 0$ entsprechende Signal am Ausgang 172 eine Erniedrigung des am Eingang 32 anliegenden Schwellwerts SW gegenüber dem Basisschwellwert BSW gemäß dem niedereren Schwellwert $SW_1$. Umgekehrt wird bei einem zuletzt erfassten Status Q = 0 des Logiksignals der am Eingang 32 anliegende Schwellwerts SW gegenüber dem Basisschwellwert BSW durch das dem invertierten Status $\overline{Q} = 1$ 1 entsprechende Signal am Ausgang 172 auf den höheren Schwellwert $SW_0$ angehoben.

Der Widerstand 174 ist wahlweise mit dem ersten Widerstand 60 effektiv parallel geschaltet für Q = 1 oder mit dem zweiten Widerstand 62 effektiv parallel geschaltet für Q = 0. Ist das dem invertierten Status $\overline{Q} = 0$ entsprechende

Signal am Ausgang 172 gleich dem Erdungspotential und das dem invertierten Status $\overline{Q}$ = 1 entsprechende Signal am Ausgang 172 gleich der Versorgungsspannung $V_{cc}$, sind dem höheren und niedereren Schwellwert entsprechende Spannungspegel gegeben durch:

$$SW_0 = V_{cc}\ \frac{R_{62}(R_{60}^{-1} + R_{174}^{-1})}{1 + R_{62}(R_{60}^{-1} + R_{174}^{-1})},$$

und

$$SW_1 = V_{cc}\ \frac{1}{1 + R_{60}(R_{62}^{-1} + R_{174}^{-1})}.$$

Die vorstehend unter Bezugnahme auf die Fign. 13A, 13B und 14 beschriebene hysteretische Umsetzung des analogen Sensorsignals $A_{analog}$ in das digitale Logiksignal $A_{digital}$ ist besonders vorteilhaft in Verbindung mit der in Fig. 11 gezeigten Vorrichtung 100. So tritt bei Stillstand eines Wasserzählers in einer Umgebung eines Quadraturübergangs auch bei pendelnder Wassersäule kein Übergangsflackern auf, womit auch bei einer Pendelbewegung kein (von der Änderung des ersten Logiksignals $A_{digital}$ abhängiges) zweites Abtastkommando 106 auslösen wird. Dadurch ist auch bei Pendelbewegungen eine Stromersparnis um einen Faktor 2 erreichbar.

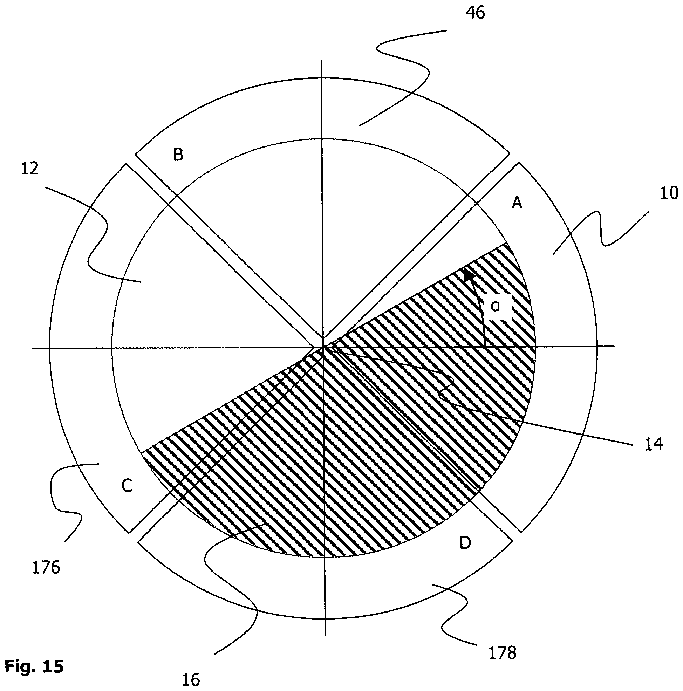

Bereits mit der vorstehend beschriebenen Vorrichtung 100 ist nahezu eine Halbierung des Strombedarfs erreicht, wobei der erste Sensor 10 (und dessen Sensorelektronik 52 oder 152) weiterhin mit der hohen Abtastrate $f_{Abtastung}$ (gemäß Gleichung (1)) bestromt werden. Die hohe Abtastrate $f_{Abtastung}$ ist größer ist als die gemäß dem Abtasttheorem idealerweise ausreichende Abtastrate $4f_{max}$ bei einer Quadraturerkennung mit nahezu idealem Schwellwert. So muss die Abtastrate $f_{Abtastung}$ bei einem um 50% eines Signalhubs H vom idealen Schwellwert 24 abweichenden realen Schwellwert 26 verdoppelt werden, wie vorstehend unter Bezugnahme auf Fig. 10 und die modellhafte Gleichung (1) für $|\gamma|$ = 0,5 beschrieben. Für Sensoren 10, 46 mit einem 90° umfassenden empfindlichen Sensorsegment (entsprechend $\beta$ = ¼) würde gemäß der modellhaften Gleichung (1) für $|\gamma| \rightarrow$ 1 die Abtastrate $f_{Abtastung}$ zutreffend unendlich werden. Die mit dem gepulsten Betrieb verbundene Stromersparnis gegenüber einer kontinuierlichen Erfassung wäre dann zumindest für den ersten Sensor 10 nicht mehr realisiert. Deshalb ist es wichtig, einen Schwellwert SW zu bestimmen, der dem idealen Schwellwert 24 möglichst nahe kommt. Nachstehend sind unter Bezugnahme auf die Fign. 15 bis 18 Weiterbildungen der Vorrichtung 100 zur selbstständigen Bestimmung des Schwellwerts SW beschrieben.

Fig. 15 zeigt eine Anordnung von vier Sensoren 10, 46, 176 und 178, die jeweils mit dem ersten Sensor 10 baugleich sind. Insbesondere weisen die Sensoren 10, 46, 176 und 178 jeweils ein 90° umfassendes empfindliches Sensorsegment A, B, C bzw. D zur induktiven oder kapazitiven Wechselwirkung mit der metallischen Beschichtung 16 des Drehelements 12 aufweisen, und sind in einer Ebene senkrecht zur Drehachse 14 des Drehelements 12 jeweils um 90° zueinander drehversetzt angeordnet.

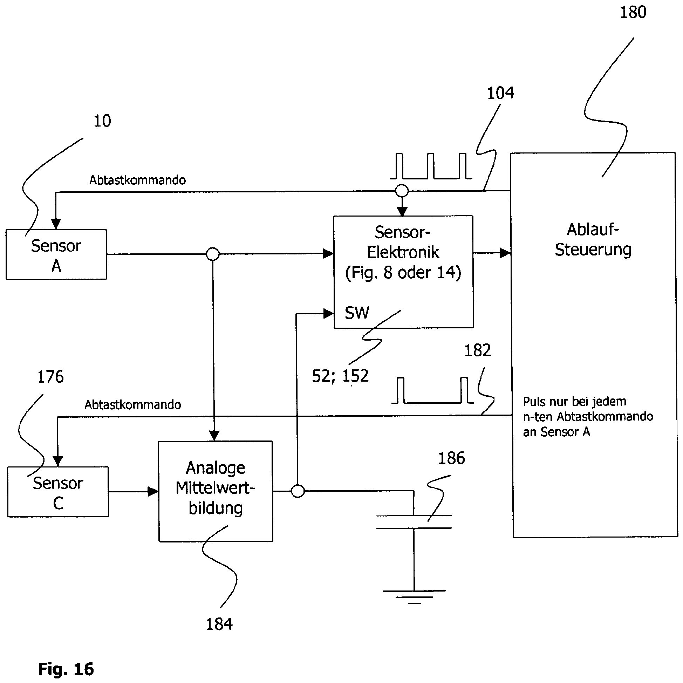

Fig. 16 zeigt ein Blockschaltbild einer Schwellwertbestimmungseinheit zur analogen Bestimmung des Schwellwerts SW. Eine Ablaufsteuerung 180 (als Teil der Steuerungslogik 102) ist mit dem ersten Sensor 10 und der diesem zugeordneten Sensorelektronik 52 oder 152 zur Ausgabe eines ersten Abtastkommandos 104 verbunden. Die Sensorelektronik ist die in Fig. 8 gezeigte Sensorelektronik 52 oder die in Fig. 14 gezeigte erweiterte Sensorelektronik 152 mit digitalem hysteretischem Schaltverhalten und setzt das vom Sensor 10 erhaltene analoge Sensorsignal $A_{analog}$ in Abhängigkeit vom Schwellwert SW in ein an die Ablaufsteuerung 180 (oder allgemein an die Steuerungslogik 102) abgegebenes digitales Logiksignal $A_{digital}$ um.

Ferner gibt die Ablaufsteuerung 180 ein drittes Abtastkommando 182 an den dritten Sensor 176 aus. Das dritte Abtastkommando 182 kann synchron mit dem ersten Abtastkommando 104 ausgegeben werden. Zur Stromersparnis wird in dem in Fig. 16 gezeigten Ausführungsbeispiel der Schwellwertbestimmungseinheit das dritte Abtastkommando 182 nur bei einem Vielfachen des ersten Abtastkommandos 104 ausgegeben, beispielsweise nur bei jedem zweiten, dritten oder zehnten Abtastkommando 104. Eine analoge Mittelwertbildungseinheit 184 mittelt das vom ersten Sensor 10 erhaltenen erste Sensorsignal $A_{analog}$ und ein vom dritten Sensor 176 erhaltenes drittes Sensorsignal $C_{analog}$ zu einem Spannungspegel des Schwellwerts SW, der in einem Kondensator 186 gespeichert wird. Damit steht der Sensorelektronik 52 oder 152 der Schwellwert SW zur Umsetzung des ersten analogen Sensorsignals $A_{analog}$ auch bei einem ersten Abtastkommando 104 ohne zeitgleiches drittes Abtastkommando 182 zur Verfügung.

Die analoge Mittelwertbildung 184 gibt in dem Ausführungsbeispiel der Fig. 16 das arithmetische Mittel aus dem ersten Sensorsignal $A_{analog}$ und dem dritten Sensorsignal $C_{analog}$ als Spannungspegel des Schwellwerts SW aus. Da die Sensoren 10 und 176 wie in Fig. 15 gezeigt gegenüberliegend angeordnet sind, ist ein die Kopplung mit der Metallbeschichtung 16 des Drehelements 12 repräsentierender Signalanteil in den Sensorsignalen $A_{analog}$ und $C_{analog}$ gegenläufig und im gemittelten Schwellwert eliminiert. Der Mittelwert beinhaltet ein auf die Sensoren 10, 176 eventuell einwirkendes äußeres elektrisches oder magnetisches Feld, so dass der durch die Mittelwertbildung bestimmte Schwellwert SW dem in Fig. 2 gezeigten idealen Schwellwert 24 sehr nahe kommt.

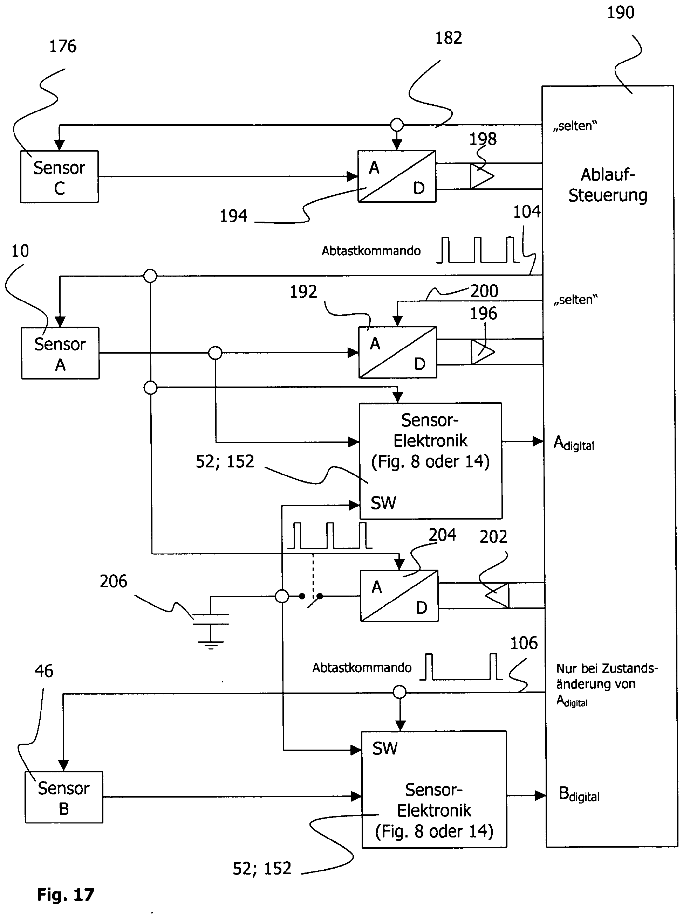

Fig. 17 zeigt ein zur digitalen Schwellwertbestimmung weitergebildetes Ausführungsbeispiel der in Fig. 11 gezeigten Vorrichtung 100. Während die in Fig. 16 gezeigte Schwellwertbestimmungseinheit eine analoge Mittelwertbildung 184 einsetzt, basiert die in Fig. 17 gezeigte Ausführungsform auf einer digitalen Mittelwertbildung. Eine Ablaufsteuerung 190 ist mit dem ersten Sensor 10 und dessen Sensorelektronik 52 oder 152 zur Ausgabe des ersten Abtastkommandos 104, mit dem zweiten Sensor 46 und dessen Sensorelektronik 52 oder 152 zur Ausgabe des zweiten Abtastkommandos 106, und mit dem dritten Sensor 176 zur Ausgabe des dritten Abtastkommandos 182 verbunden. Die Ablaufsteuerung 190 ist Teil der Steuerungslogik 102 und erhält von der den ersten und zweiten Sensoren 10, 46 jeweils zugeordneten Sensorelektroniken 52 oder 152 das zuletzt erfasste digitale Logiksignal $A_{digital}$ bzw. $B_{digital}$. Die Ablaufsteuerung 190 realisiert die bedingte Abtastung des zweiten Sensors 46 für eine Auswertung gemäß der ersten Dekodiertabelle in Fig. 12, und gibt nur bei einer Änderung des ersten Logiksignals $A_{digital}$ ein Abtastkommando zur Erfassung des zweiten Logiksignals $B_{digital}$ aus.

Das erste analoge Sensorsignal $A_{analog}$ des Sensors 10 und das dritte analoge Sensorsignal $C_{analog}$ des dritten Sensors 176 werden in Reaktion auf ein Mittelungskommando 200 bzw. das dritte Abtastkommando 182 von einem Analog-Digital-Wandler 192 bzw. 194 in entsprechende digitale Signalwerte 196 bzw. 198 umgesetzt und an die Ablaufsteuerung 190 bereitgestellt. Die Ablaufsteuerung 190 bestimmt auf Grundlage der digitalen Signalwerte 196 und 198 einen digitalen Mittelwert 202. Der digitale Mittelwert 202 wird an einen Digital-Analog-Wandler 204 ausgegeben. Der Digital-Analog-Wandler 204 erzeugt in Reaktion auf das Abtastkommando 104 einen dem Mittelwert 202 entsprechenden Spannungspegel des Schwellwerts SW, der in einem Kondensator 206 gespeichert wird. Ein alternatives Ausführungsbeispiel verzichtet auf den Kondensator 206 und umfasst ein eingangsseitig mit dem ersten Abtastkommando 104 und dem zweiten Abtastkommando 106 verbundenes Oder-Gatter, das ausgangsseitig mit dem Digital-Analog-Wandler 204 zur Steuerung der Erzeugung des Spannungspegels des Schwellwerts SW verbunden ist. So kann zur Stromersparnis der Schwellwert SW nur kurzzeitig um den jeweiligen Abtastzeitpunkt herum ausgegeben werden.

Der gespeicherte Schwellwert SW wird sowohl der dem ersten Sensor 10 zugeordneten Sensorelektronik 52 oder 152 als auch der dem zweiten Sensor 46 zugeordneten Sensorelektronik 52 oder 152 eingangsseitig als Schwellwert SW bereitgestellt. Da äußere Störeinflüsse (wie elektrische oder magnetische Felder) auf den ersten Sensor 10 und den zweiten Sensor 46 eine ähnliche Größe und einen ähnlichen Verlauf aufweisen, kann derselbe Schwellwert SW für beiden Sensorelektroniken zur Umsetzung des jeweiligen analogen Sensorsignals in das entsprechende digitale Logiksignal eingesetzt werden. Auf den vierten Sensor 178 kann verzichtet werden.

In einer alternativen Ausführungsform ist statt einem gemeinsamen Schwellwert SW (oder einem gemeinsamen Basisschwellwert BSW zur hysteretischer Umsetzung) eine wie für die Sensoren 10 und 176 in Fig. 16 gezeigte analoge Mittelwertbildung oder in Fig. 17 gezeigte digitale Mittelwertbildung auch für den zweiten Sensor 46 und den vierten Sensor 178 vorgesehen.

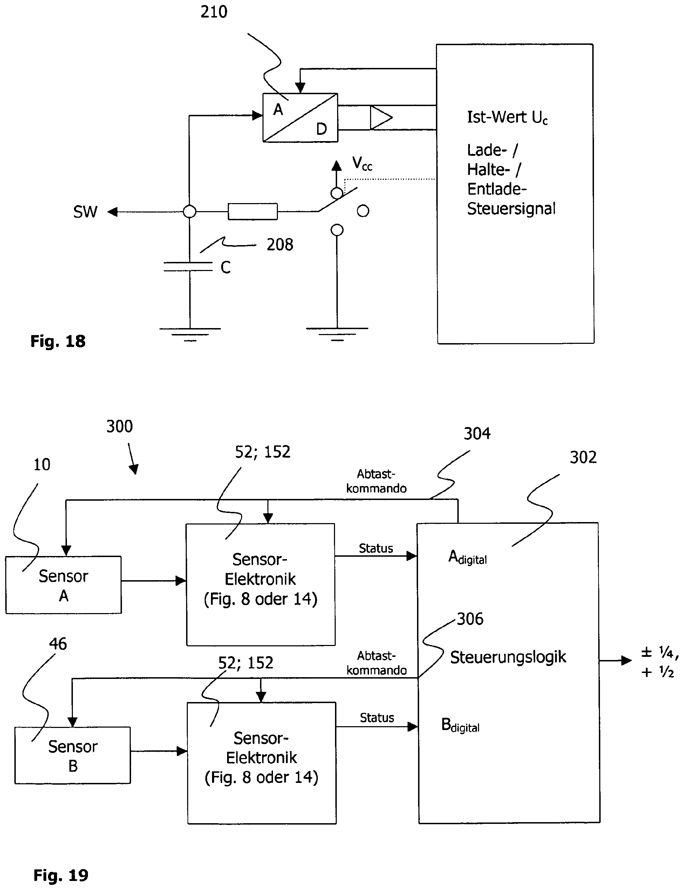

Statt eines aufwendigen Digital-Analog-Wandlers 204 kann ein in Fig. 18 gezeigter Schaltkreis zur Erzeugung des Schwellwerts SW (oder eines gemeinsamen Basisschwellwerts BSW zur hysteretischer Umsetzung) und zur Speicherung mittels eines Kondensators 208 eingesetzt sein. Der Spannungspegel des Kondensators 208 wird über einen einfacheren Analog-Digital-Wandler 210 kontrolliert und bei Abweichungen von einem Soll-Schwellwert durch zeitgesteuerte Lade- und Entlade-Phasen auf den Soll-Schwellwert eingestellt. Stimmt der Spannungspegel mit dem Soll-Schwellwert überein, wird der Kondensator 208 durch eine Haltesteuersignal isoliert. Der Schaltkreis ist besonders vorteilhaft zur gleitenden Anpassung des Schwellwerts geeignet, da der ideale oder gemittelte Schwellwert sich typischerweise stetig verändert.

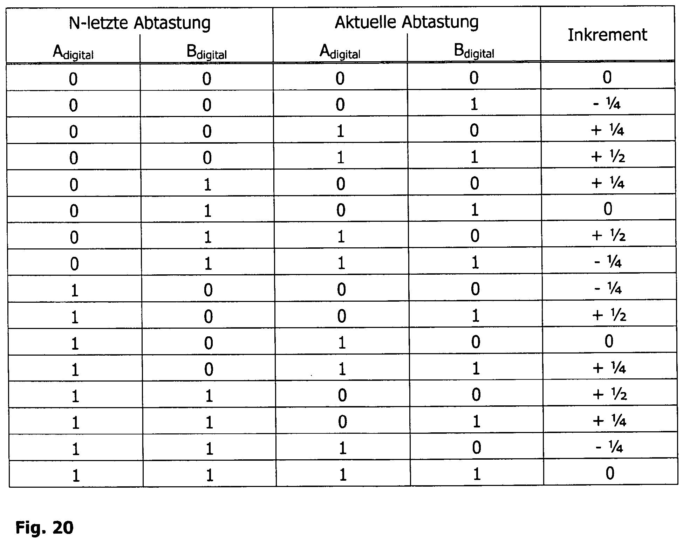

Fig. 19 zeigt ein zweites Ausführungsbeispiel einer Vorrichtung 300 zur Erfassung einer Drehbewegung. Die Vorrichtung 300 unterscheidet sich von der in Fig. 11 gezeigten Vorrichtung 100 hinsichtlich einer Steuerungslogik 302, die einen Mikroprozessor (nicht gezeigt) und einen damit verbundenen Speicher (nicht gezeigt) umfasst, der eine in Fig. 20 gezeigte zweite Dekodiertabelle enthält. Während die Steuerungslogik 102 regelmäßig das erste Abtastkommando 104 an den ersten Sensor 10 (und dessen Sensorselektronik 52 oder 152) ausgibt und nur bei einer Änderung des ersten Logiksignals $A_{digital}$ das zweite Abtastkommando 106 an den zweiten Sensor 46 und (dessen Sensorelektronik 52 oder 152) ausgibt, gibt die Steuerungslogik 302 regelmäßig und im Wesentlichen zeitgleich ein erstes Abtastkommando 304 an den ersten Sensor 10 und (dessen Sensorelektronik 52 oder 152) und ein zweites Abtastkommando 306 an den zweiten Sensor 46 (und dessen Sensorelektronik 52 oder 152) aus. Die Steuerungslogik 302 erhält so das erste Logiksignal $A_{digital}$ und das zweite Logiksignal $B_{digital}$ mit im Wesentlichen übereinstimmenden Erfassungszeiten, und bestimmt Inkremente +1/4, -1/4, +1/2 zur Aktualisierung eines Zählers der Drehbewegung.

Der Mikroprozessor bestimmt anhand der in Fig. 20 gezeigten zweiten Dekodiertabelle das Inkrement auf Grundlage eines das erste und zweite Logiksignal umfassenden zuletzt erfassten Zustands ($A_{digital}$, $B_{digital}$) und eines aktuell erfassten Zustands ($A_{digital}$, $B_{digital}$). Während eine konventionelle Quadraturerkennung bei idealem Schwellwert eine mindest Abtastrate von $f_{Abtastung} = 4\,f_{max}$ erfordert, genügt für eine Dekodierung gemäß der zweiten Dekodiertabelle bei idealem Schwellwert eine Abtastrate von $f_{Abtastung} = 2\,f_{max}$. Damit wird bei idealem Schwellwert bereits eine Halbierung des Strombedarfs erreicht.

Die zweite Dekodiertabelle gemäß Fig. 20 nutzt eine anwendungsspezifische oder konstruktiv bedingte Asymmetrie eines Fördersystems, die insbesondere bei Wasserzählern vorliegt: Eine Maximaldrehzahl in Rückwärtsrichtung (d.h. in negativer Drehrichtung entsprechend einem negativen Inkrement) ist entweder applikativ oder konstruktiv-hydraulisch stets um mindestens Faktor 2 kleiner als eine Maximaldrehzahl in Vorwärtsrichtung. Eine Erfassung der Drehbewegung bei schnellem Vorwärtslauf, d.h. bei einer positiven Drehzahl, die größer als die Maximaldrehzahl in Rückwärtsrichtung ist, ist dann auch ohne direkte Drehrichtungserkennung möglich. Dem schnellen Vorwärtslauf entsprechen in der in Fig. 20 gezeigten zweiten Dekodiertabelle die in den Zeilen 4, 7, 10 und 13 definierten Zustandsänderungen. Bei diesen Zustandsänderungen liegt eine schnell Vorwärtsbewegung (mit einer positiven Drehzahl oberhalb der Maximaldrehzahl für eine Drehbewegung in negativer Drehrichtung) vor, die auf Grundlage einer Änderung beider Logiksignale $A_{digital}$ und $B_{digital}$ in aufeinanderfolgenden Zustandserfassungen dekodiert wird. Der Änderung beider Logiksignale entspricht ein Überspringen eines Quadranten, womit der Betrag des Inkrements ½ ist. Das Vorzeichen des Inkrements liegt wegen der Asymmetrie unabhängig von einer Quadraturerkennung als positives Vorzeichen fest.

Während die Dekodierung gemäß der in Fig. 20 gezeigten zweiten Dekodiertabelle bereits bei idealem Schwellwert den Strombedarf um einen Faktor 2 reduziert, ist diese Dekodierung noch effektiver bei nicht-idealem Schwellwert. Während eine Quadraturerkennung eine Erkennung jedes einzelnen Quadranten erfasst und dadurch auf Flankenverschiebungen (wie in Fig. 10 gezeigt) mit einer erheblich erhöhten (eventuell sogar unendlichen) Abtastrate $f_{Abtastung}$ reagiert werden muss, ist die Dekodierung gemäß Fig. 20 weit weniger durch Flankenverschiebungen beeinträchtigt. Wie am Beispiel der in Fig. 10 gezeigten Flankenverschiebung vorstehend diskutiert, hat eine Abweichung des realen Schwellwerts 26 um 50% vom idealen Schwellwert 24 eine Verkürzung der Zustandsdauer eines der die vier Quadranten repräsentierenden Zustands (($A_{digital}$, $B_{digital}$) = (1,1) im Beispiel der Fig. 10) von idealerweise 90° auf 90° - 45° = 45° zur Folge. Dem entspricht eine Erhöhung der Abtastrate von ideaterweise $f_{Abtastung} = 360°/90°\,f_{max} = 4\,f_{max}$ auf $f_{Abtastung} = 360°/(90° - 45°)\,f_{max} = 8\,f_{max}$. Dagegen ist bei einer Dekodierung gemäß der zweiten Dekodiertabelle nicht nur die ideale Abtastrate nur halb so groß wie bei einer konventionellen Quadraturerkennung, auch eine Erhöhung der Abtastrate bei nicht-idealem Schwellwert ist weitaus geringer. So führt dieselbe Flankenverschiebung bei der vorgenannten Abweichung des realen Schwellwerts 26 um 50% vom idealen Schwellwert 24 zu einer Erhöhung der idealen Abtastrate von $f_{Abtastung} = 360°/180°\,f_{max} = 2\,f_{max}$ auf lediglich $f_{Abtastung} = 360°/(180° - 45°)\,f_{max} = 2,7\,f_{max}$. Dies entspricht bei gleichem realen Schwellwert einer Stromersparnis um den Faktor S = 8/2,7 = 3.

Im Allgemeinen ist die Abtastrate einer Quadraturerkennung bei nicht-idealem Schwellwert 26 durch Gleichung (1) modellhaft beschrieben. Demgegenüber erfordert die Dekodierung gemäß Fig. 20 nur eine Abtastung jeder Halbumdrehung entsprechend einer Mindestabtastrate

$$f_{Abtastung} = \frac{2}{1 - \beta(|\gamma_A| + |\gamma_B|)}\,f_{max}. \qquad (2)$$

Der wesentlich niedrigeren Abtastrate entspricht eine Stromersparnis gegenüber einer konventionellen Quadraturerkennung um einen Faktor,

$$S = 2\,\frac{1 - \beta(|\gamma_A| + |\gamma_B|)}{1 - 2\beta(|\gamma_A| + |\gamma_B|)} > 2,$$

der bei nicht-idealem Schwellwert auch deutlich über S = 3 liegen kann.

Das zweite Ausführungsbeispiel der Vorrichtung 300 zur Erfassung einer Drehbewegung auf Grundlage der in Fig. 20 gezeigten zweiten Dekodiertabelle ist kombinierbar mit sämtlichen vorstehend (für das erste Ausführungsbeispiel der Vorrichtung 100 zur Erfassung einer Drehbewegung) genannten Weiterbildungen zur hysteretischen Umsetzung eines analogen Sensorsignals in ein entsprechendes digitales Logiksignal gemäß Fig. 14 und/oder mit den unter Bezugnahme auf die Fign. 15 bis 18 beschriebenen Schwellwertbestimmungen.

Die Vorrichtung 100 erreicht eine Reduzierung des Strombedarfs um nahezu einen Faktor 2 durch die bedingte Abtastung des zweiten Sensors 46 nur bei einer Änderung des ersten Logiksignals $A_{digital}$. Die Vorrichtung 100 und die mit ihr verbundene Stromersparnis ist allgemein einsetzbar. Die Vorrichtung 300 zur Erfassung einer Drehbewegung erreicht eine Stromersparnis einen Faktor S > 2, typischerweise S = 3, durch eine einzelne Quadranten überspringende Dekodierung. Die Vorrichtung 300 ist einsetzbar, wenn eine maximale Vorwärtsdrehzahl eine maximale Rückwärtsdrehzahl um mindestens einen Faktor 2 übertrifft.

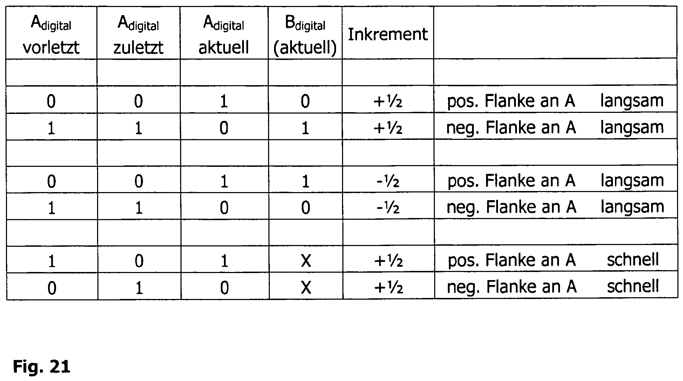

Die Vorteile der Stromersparnis der Vorrichtungen 100 und 300 sind ferner kombiniert in einem dritten Ausführungsbeispiel durch eine Dekodierung gemäß einer in Fig. 21 gezeigten dritten Dekodiertabelle. Ausgehend vom ersten Ausführungsbeispiel der Vorrichtung 100 zur Erfassung einer Drehbewegung umfasst eine weitergebildete Steuerungslogik 102 (neben einem Speicher zum Speichern des zuletzt erfassten ersten Logiksignals $A_{digital}$) ferner einen Speicher zum Speichern eines vorletzt erfassten ersten Logiksignals $A_{digital}$. Die Dekodierung, d.h. die Bestimmung eines Inkrements zur Aktualisierung eines Zählers der Drehbewegung, erfolgt auf Grundlage des vorletzt erfassten, des zuletzt erfassten und des aktuell erfassten ersten Logiksignals $A_{digital}$ in Verbindung mit einem zweiten Logiksignal $B_{digital}$. Das zweiten Logiksignal $B_{digital}$ wird grundsätzlich aufgrund einer Änderung des aktuell erfassten ersten Logiksignals gegenüber dem zuletzt erfassten ersten Logiksignal $A_{digital}$ erfasst.

Die Dekodierung gemäß der dritten Dekodiertabelle erfolgt wie die Dekodierung gemäß der in Fig. 12 gezeigten ersten Dekodiertabelle, falls der aktuell erfassten Änderung des ersten Logiksignals $A_{digital}$ (d.h. einer positiven oder negativen Flanke des ersten Sensorsignals zwischen der aktuellen und der unmittelbar vorausgehenden Erfassung) keine Änderung des ersten Logiksignals $A_{digital}$ innerhalb einer fest vorbestimmten Maximalzeit vorausgeht (d.h. zwischen der N-letzten und der (N+1)-letzten Erfassung keine positive oder negative Flanke des ersten Sensorsignals liegt für ein N=1,2,3,4,...). Ändert sich dagegen das regelmäßig erfasste erste Logiksignal $A_{digital}$ innerhalb der Maximalzeit (insbesondere unmittelbar aufeinanderfolgend im Fall N=1, d.h. falls das zuletzt erfasste $A_{digital}$ vom aktuell erfassten $A_{digital}$ als auch das vorletzt erfasste $A_{digital}$ vom zuletzt erfassten $A_{digital}$ abweicht), wird ein Inkrement +½ unabhängig vom zweiten digitalen Logiksignal $B_{digital}$ bestimmt. Im Fall der aufeinanderfolgenden Änderungen des ersten Logiksignals kann auf eine Erfassung des zweiten Sensorsignals verzichtet werden. Auf Grundlage der in der Maximalzeit erfolgten zwei Änderungen (der Form 0-1-0 oder 1-0-1) des ersten Logiksignals $A_{digital}$ wird der schnelle Vorwärtslauf (mit einer Drehzahl oberhalb der maximalen Rückwärtsdrehzahl) dekodiert, wobei (wegen der Asymmetrie) das positive Vorzeichen des Inkrements festliegt.

Damit sind gegenüber einer konventionellen Quadraturerkennung eine Stromersparnis um einen Faktor von nahezu 2 (durch die bedingte Abtastung) und um einen weiteren Faktor über 2 (typischerweise 3, durch die einzelne Quadranten überspringende Abtastung bei schnellem Vorwärtslauf) erreicht. Damit erreicht das dritte Ausführungsbeispiel eine Verringerung des Stromverbrauchs gegenüber der konventionellen Quadraturerkennung um annähernd

$$ S = 4\ \frac{1 - \beta(|\ \gamma_A\ | + |\ \gamma_B\ |)}{1 - 2\beta(|\ \gamma_A\ | + |\ \gamma_B\ |)}\ . $$

Insbesondere ist eine Stromersparnis um rund einen Faktor S = 6 bei einem nichtidealen um rund 50% abweichenden realen Schwellwert 26 erreichbar.

## Patentansprüche

1.  Vorrichtung (100) zur Erfassung einer Drehbewegung, umfassend

- einen ersten Sensor (10) zum Erfassen eines ersten Drehstellungsbereichs eines Drehelements,
- einen zweiten Sensor (46) zum Erfassen eines gegenüber dem ersten Drehstellungsbereich um 10° bis 170°, vorzugsweise im Wesentlichen 90°, versetzten zweiten Drehstellungsbereichs des Drehelements und
- eine Steuerung (102; 190), die dazu ausgebildet ist, nur im Fall einer Änderung eines ersten Signals ($A_{analog}$; $A_{digital}$) des ersten Sensors (10), den zweiten Sensor (46) zum Erfassen eines zweiten Signals ($B_{analog}$; $B_{digital}$) zu aktivieren und einen Zähler der Drehbewegung zu inkrementieren, wobei die Steuerung (102; 190) ferner dazu ausgebildet ist, den zweiten Sensor (46) nur zu aktivieren, falls innerhalb einer Maximalzeit vor der Änderung des ersten Signals ($A_{analog}$; $A_{digital}$) keine Änderung des ersten Signals ($A_{analog}$; $A_{digital}$) erfasst wurde.

2.  Vorrichtung nach Anspruch 1, bei der die Steuerung (102; 190) ferner dazu ausgebildet ist, das erste Signal ($A_{analog}$; $A_{digital}$) regelmäßig zu erfassen.

3.  Vorrichtung nach Anspruch 1 oder 2, bei der die Maximalzeit durch eine Anzahl an Erfassungen des ersten Signals ($A_{analog}$; $A_{digital}$) bestimmt ist.

4.  Vorrichtung nach einem der Ansprüche 1 bis 3, bei der mittels der Maximalzeit eine Drehzahlschwelle bestimmt ist.

5.  Vorrichtung nach Anspruch 4, wobei die Drehzahlschwelle, $f^{(S)}_{max}$, mit der Maximalzeit, $T_{max}$, gemäß

$$f^{(S)}_{max} = 1/(2 \cdot T_{max})$$

in Zusammenhang steht.

6. Vorrichtung nach Anspruch 3 und 4, wobei die Drehzahlschwelle, $f^{(S)}_{max}$, mit der Anzahl an Erfassungen, N, gemäß

$$f^{(S)}_{max} = f_{Abtastung}/(2 \cdot N)$$

in Zusammenhang steht, wobei $f_{Abtastung}$ eine Erfassungsrate zumindest des ersten Singals ($A_{analog}$; $A_{digital}$) ist.

7. Vorrichtung nach einem der vorhergehenden Ansprüche, bei der die Steuerung (102; 190) ferner dazu ausgebildet ist, ein einer Richtung der Drehbewegung entsprechendes Vorzeichen der Inkrementierung auf Grundlage der Änderung des ersten Signals ($A_{analog}$; $A_{digital}$) in Verbindung mit dem zweiten Signal ($B_{analog}$; $B_{digital}$) zu bestimmen.

8. Vorrichtung nach einem der vorhergehenden Ansprüche, bei der die Steuerung (102; 190) ferner dazu ausgebildet ist,

   - im Fall von zwei oder mehr Änderungen des ersten Signals ($A_{analog}$; $A_{digi-tal}$) innerhalb der Maximalzeit den Zähler mit einem vorbestimmten Vorzeichen zu inkrementieren.

9. Vorrichtung nach einem der vorhergehenden Ansprüche, bei der dem ersten und zweiten Sensor (10, 46) jeweils ein Komparator (28) zugeordnet ist, der das jeweilige erste bzw. zweite Sensorsignal ($A_{analog}$; $B_{analog}$) abhängig von einem Schwellwert (SW; $SW_0$, $SW_1$) in ein erstes bzw. zweites Logiksignal ($A_{digital}$; $B_{digital}$) umsetzt.

10. Vorrichtung nach Anspruch 9, bei der eine erste Speichereinheit (166) und eine zweite Speichereinheit das erste bzw. zweite Logiksignal ($A_{digital}$; $B_{digital}$) speichern und den Schwellwert (SW; $SW_0$, $SW_1$) des zugeordneten Komparators (28) beeinflussen für ein hysteretisches Schaltverhalten des zugeordneten Komparators (28).

11. Vorrichtung nach einem der vorhergehenden Ansprüche, ferner umfassend

    - einen zum ersten Sensor (10) um 100° bis 260°, vorzugsweise im Wesentlichen 180°, versetzt angeordneten dritten Sensor (176) zum Erfassen eines dritten Signals ($C_{analog}$; $C_{digital}$; 198) und
    - eine Schwellwertbestimmungseinheit zur Bestimmung des Schwellwerts (SW; $SW_0$, $SW_1$) als eine Funktion, vorzugsweise als Mittelwert, des ersten Signals ($A_{analog}$; $A_{digital}$) und des dritten Signals ($C_{analog}$; $C_{digital}$; 198).

12. Vorrichtung nach einem der vorhergehenden Ansprüche, bei der zumindest der zweite Sensor (46), vorzugsweise alle Sensoren (10, 46, 176, 178) und Komparatoren (28), nur zur jeweiligen Signalerfassung gepulst betrieben werden, ferner eine bezüglich einer Drehachse der Drehbewegung zentrierte Geberspule umfassend, die dazu ausgebildet ist, bei der Erfassung wenigstens eines der Signale ($A_{analog}$; $A_{digital}$; $B_{analog}$; $B_{digital}$; $C_{analog}$; $C_{digital}$; 198) ein Magnetfeld zu erzeugen, wobei jeder der Sensoren (10, 46, 176, 178) jeweils eine Empfängerspule aufweist, die dazu ausgebildet ist, ein vom Magnetfeld induziertes und vom Drehelement drehstellungsabhängig moduliertes Spannungssignal zu erfassen.

13. Vorrichtung nach einem der vorhergehenden Ansprüche, ferner das Drehelement umfassend, welches zur Volumendurchflussmessung von Flüssigkeiten mit einem Flügelrad gekoppelt ist.

14. Verfahren zur Erfassung einer Drehbewegung, umfassend die Schritte

    - fortlaufendes Erfassen eines ersten Signals ($A_{analog}$; $A_{digital}$) hinsichtlich eines ersten Drehstellungsbereichs eines Drehelements mittels eines ersten Sensors (10),
    - Aktivieren, nur im Fall einer Änderung des ersten Signals ($A_{analog}$; $A_{digital}$), eines zweiten Sensors (46) zum Erfassen eines zweiten Signals ($B_{analog}$; $B_{digital}$) hinsichtlich eines gegenüber dem ersten Drehstellungsbereich um 10° bis 170°, vorzugsweise im Wesentlichen 90°, versetzten zweiten Drehstellungsbereichs des Drehelements, wobei der zweiten Sensor (46) nur aktiviert wird, falls innerhalb einer Maximalzeit vor der Änderung des ersten Signals ($A_{analog}$; $A_{digital}$) keine Änderung des ersten Signals ($A_{analog}$; $A_{digital}$) erfasst wurde, und
    - Inkrementieren eines Zählers der Drehbewegung im Fall der Änderung des ersten Signals ($A_{analog}$; $A_{digital}$).

**15.** Verfahren nach Anspruch 14, wobei die Maximalzeit durch eine Anzahl an Erfassungen des ersten Signals ($A_{analog}$; $A_{digital}$) bestimmt ist.

**Claims**

**1.** An apparatus (100) for detecting a rotational movement, comprising

- a first sensor (10) for detecting a first rotational position range of a rotary element,
- a second sensor (46) for detecting a second rotation position range of the rotary element offset by 10° to 170°, preferably essentially by 90°, with respect to the first rotation position range, and
- a control (102; 190) configured to, only in case of a change of a first signal ($A_{analogue}$; $A_{digital}$) of the first sensor (10), activate the second sensor (46) for detecting a second signal ($B_{analogue}$; $B_{digital}$) and increment a counter of the rotational movement, wherein the control (102; 190) is further configured to only activate the second sensor (46) if within a maximum time prior to the change of the first signal ($A_{analogue}$; $A_{digital}$) no change of the first signal ($A_{a-nalogue}$; $A_{digital}$) is detected.

**2.** The apparatus according to claim 1, wherein the control (102; 190) is further configured to detect the first signal ($A_{analogue}$; $A_{digital}$) periodically.

**3.** The apparatus according to claim 1 or 2, wherein the maximum time is determined through a number of detections of the first signal ($A_{analogue}$; $A_{digital}$).

**4.** The apparatus according to any of the claims 1 to 3, wherein a rotational speed threshold is determined through the maximum time.

**5.** The apparatus according to claim 4, wherein the rotational speed threshold, $f^{(S)}_{max}$, is related to the maximum time, $T_{max}$, according to

$$f^{(S)}_{max} = 1/(2 \cdot T_{max}).$$

**6.** The apparatus according to claim 3 and 4, wherein the rotational speed threshold, $f^{(S)}_{max}$, is related to the number of detections, N, according to

$$f^{(S)}_{max} = f_{sampling}/(2 \cdot N),$$

wherein $f_{sampling}$ is a detection rate at least of the first signal ($A_{analogue}$; $A_{digital}$).

**7.** The apparatus according to any preceding claim, wherein the control (102; 190) is further configured to determine an algebraic sign of the incrementation according to a direction of the rotational movement based on the change of the first signal ($A_{a-nalogue}$; $A_{digital}$) in combination with the second signal ($B_{analogue}$; $B_{digital}$).

**8.** The apparatus according to any preceding claim, wherein the control (102; 190) is further configured to

- increment the counter with a pre-determined algebraic sign in case of two or more changes of the first signal ($A_{analogue}$; $A_{digital}$) within the maximum time.

**9.** The apparatus according to any preceding claim, wherein the first and the second sensors (10, 46) each is assigned a comparator (28), which converts the respective first or second sensor signal ($A_{analogue}$; $B_{analogue}$) into a respective first or second logic signal ($A_{digital}$; $B_{digital}$) dependent on a threshold value (SW; $SW_0$; $SW_1$).

**10.** The apparatus according to claim 9, wherein a first memory unit (166) and a second memory unit respectively save the first or second logic signal ($A_{digital}$; $B_{digital}$) and influence the threshold value (SW; $SW_0$; $SW_1$) of the assigned comparator (28) for a hysteretical switching behavior of the assigned comparator (28).

11. The apparatus according to any preceding claim, further comprisigng

- a third sensor (176) disposed offset by 100° to 260°, preferably essentially by 180°, with respect to the first sensor (10) for detecting a third signal ($C_{ana\text{-}logue}$; $C_{digital}$; 198) and
- a threshold value determination unit for determining the threshold value (SW; $SW_0$; $SW_1$) as a function, preferably as a mean value, of the first signal ($A_{analogue}$; $A_{digital}$) and the third signal ($C_{analogue}$; $C_{digital}$; 198).

12. The apparatus according to any preceding claim, wherein at least the second sensor (46), preferably all sensors (10, 46, 176, 178) and comparators (28), are only operated for the respective signal detection in a pulsed manner, further comprising a transmitter coil centered relative to a rotational axis of the rotational movement configured to generate a magnetic field upon the detection of at least one of the signals ($A_{analogue}$; $A_{digital}$; $B_{analogue}$; $B_{digital}$; $C_{analogue}$; $C_{digital}$), wherein each of the sensors (10, 46, 176, 179) has a receiver coil that is configured to detect a voltage signal induced by the magnetic field and modulated by the rotary element dependent on a rotational position.

13. The apparatus according to any preceding claim, further comprising the rotary element that is coupled with an impeller for a volume flow measurement of fluids.

14. A method for detecting a rotational movement, comprising the steps of

- continuously detecting a first signal ($A_{analogue}$; $A_{digital}$) in regard to a first rotational position range of a rotary element using a first sensor (10),
- activating, only in case of a change of the first signal ($A_{analogue}$; $A_{digital}$), a second sensor (46) for detecting a second signal ($B_{analogue}$; $B_{digital}$) in regard to a second rotation position range of the rotary element offset by 10° to 170°, preferably essentially by 90°, with respect to the first rotation position range, wherein the second sensor (46) is only activated if within a maximum time prior to the change of the first signal ($A_{analogue}$; $A_{digital}$) no change of the first signal ($A_{analogue}$; $A_{digital}$) is detected, and
- incrementing a counter of the rotational movement in case of the change of the first signal ($A_{analogue}$; $A_{digital}$).

15. The method according to claim 14, wherein the maximum time is determined by a number of detections of the first signal ($A_{analogue}$; $A_{digital}$).

**Revendications**

1. Dispositif (100) de détection d'un mouvement de rotation, comprenant

- un premier capteur (10) servant à détecter une première zone de position de rotation d'un élément rotatif,
- un deuxième capteur (46) servant à détecter une deuxième zone de position de rotation dudit élément rotatif décalée de 10° à 170°, préférentiellement essentiellement de 90°, par rapport à la première zone de position de rotation, et
- une commande (102; 190) qui est conçue, uniquement dans le cas d'une modification d'un premier signal ($A_{analog}$; $A_{digital}$) du premier capteur (10), pour activer le deuxième capteur (46) servant à détecter un deuxième signal ($B_{analog}$; $B_{digital}$) et pour incrémenter un compteur du mouvement de rotation, ladite commande (102; 190) étant en outre conçue pour activer le deuxième capteur (46) uniquement si aucune modification du premier signal ($A_{analog}$; $A_{digital}$) n'a été détectée pendant un laps de temps maximal, avant la modification du premier signal ($A_{analog}$; $A_{digital}$).

2. Dispositif selon la revendication 1, dans le cadre duquel ladite commande (102; 190) est en outre conçue pour la détection à intervalles réguliers du premier signal ($A_{analog}$; $A_{digital}$)

3. Dispositif selon revendication 1 ou 2, dans le cadre duquel le laps de temps maximal est déterminé par un nombre de détections du premier signal ($A_{analog}$; $A_{digital}$).

4. Dispositif selon l'une des revendications 1 à 3, dans le cadre duquel un seuil de nombre de tours est déterminé à l'aide du laps de temps maximal.

5. Dispositif selon la revendication 4, ledit seuil de nombre de tours, $f^{(S)}_{max}$, étant en rapport avec le laps de temps maximal, $T_{max}$, selon

$$f^{(s)}_{max} = 1/(2 \cdot T_{max})$$

6. Dispositif selon la revendication 3 et 4, ledit seuil de nombre de tours, $f^{(S)}_{max}$, étant en rapport avec le nombre de détections, N, selon

$$f^{(s)}_{max} = f_{Abtastung}/(2 \cdot N)$$

le terme $f_{Abtastung}$ étant le taux de détection au moins du premier signal ($A_{analog}$; $A_{digital}$).

7. Dispositif selon l'une des revendications précédentes, dans le cadre duquel La commande (102; 190) est en outre conçue pour déterminer, pour l'incrémentation, un signe correspondant à une direction du mouvement de rotation, sur la base de la modification du premier signal ($A_{analog}$; $A_{digital}$) en liaison avec le deuxième signal ($B_{analog}$; $B_{digital}$).

8. Dispositif selon l'une des revendications précédentes, dans le cadre duquel la commande (102; 190) est en outre conçue,

   - dans le cas d'une ou de plusieurs modifications du premier signal ($A_{analog}$; $A_{di\text{-}gital}$) dans le laps de temps maximal, pour incrémenter le compteur avec un signe prédéterminé.

9. Dispositif selon l'une des revendications précédentes, dans le cadre duquel il est attribué au premier et au deuxième capteur (10, 46) un comparateur (28) qui convertit en fonction d'une valeur seuil (SW; $SW_0$, $SW_1$) le premier et le deuxième signal de capteur ($A_{analog}$; $B_{analog}$) en un premier et un deuxième signal logique ($A_{digital}$; $B_{digital}$).

10. Dispositif selon la revendication 9, dans le cadre duquel une première unité de mémoire (166) et une deuxième unité de mémoire enregistre le premier et le deuxième signal logique ($A_{digital}$; $B_{digital}$) et influencent la valeur seuil du comparateur (28) associé en faveur d'un comportement de commutation hystérétique du comparateur (28) associé.

11. Dispositif selon l'une des revendications précédentes, comprenant en outre

   - un troisième capteur (176) servant à détecter un troisième signal ($C_{analog}$; $C_{di\text{-}gital}$; 198) et disposé décalé par rapport au premier capteur (10) de 100° à 260°, préférentiellement essentiellement de 180°, et
   - une unité de détermination de valeur seuil servant à déterminer la valeur seuil (SW; $SW_0$, $SW_1$) comme fonction, préférentiellement comme valeur moyenne, du premier signal ($A_{analog}$; $A_{digital}$) et du troisième signal ($C_{analog}$; $C_{di\text{-}gital}$; 198).

12. Dispositif selon l'une des revendications précédentes, dans le cadre duquel au moins le deuxième capteur (46), préférentiellement tous les capteurs (10, 46, 176, 178) et les comparateurs (28) ne fonctionnent en mode pulsé que pour la détection du signal visé, lequel dispositif comprend en outre une bobine génératrice qui est centrée par rapport à un axe de rotation du mouvement de rotation et conçue pour produire un champ magnétique lors de la détection d'au moins un des signaux ($A_{analog}$; $A_{digital}$; $B_{analog}$; $B_{digital}$; $C_{analog}$; $C_{digital}$; 198), chacun des capteurs (10, 46, 176, 178) présentant respectivement une bobine réceptrice qui est conçue pour détecter un signal de tension induit par le champ magnétique et modulé par l'élément rotatif en fonction de la position de rotation.

13. Dispositif selon l'une des revendications précédentes, comprenant en outre l'élément rotatif, lequel est couplé à une roue à ailettes pour la mesure du débit volumique d'un liquide.

14. Procédé permettant de détecter un mouvement de rotation, comprenant les étapes suivantes :

   - la détection en continu à l'aide d'un premier capteur (10) d'un premier signal ($A_{analog}$; $A_{digital}$) concernant une première zone de position de rotation d'un élément rotatif,
   - l'activation, uniquement dans le cas d'une modification du premier signal ($A_{analog}$; $A_{digital}$), d'un deuxième capteur (46) servant à détecter un deuxième signal ($B_{analog}$; $B_{digital}$) concernant une deuxième zone de position de rotation de l'élément rotatif décalée de 10° à 170°, préférentiellement essentiellement de 90°, par rapport à la première zone de position de rotation, ce deuxième capteur (46) n'étant activé que si aucune modification du premier signal ($A_{analog}$; $A_{digital}$) n'a été détectée pendant un laps de temps maximal avant la modification du premier signal ($A_{analog}$; $A_{digital}$),

- l'incrémentation d'un compteur du mouvement de rotation en cas de modification du premier signal ($A_{analog}$; $A_{digital}$).

15. Procédé selon la revendication 14, le laps de temps maximal étant déterminé par un nombre de détections du premier signal ($A_{analog}$; $A_{digital}$).

**Fig. 1**

**Fig. 2**

**Fig. 3**

**Fig. 4**

**Fig. 5**

**Fig. 6**

| Abtastung | $A_{digital}$ | $B_{digital}$ | Inkrement |
|---|---|---|---|
| 0 | 0 | 0 | 0 |
| 1 | 0 | 0 | 0 |
| 2 | 1 | 0 | + ¼ |
| 3 | 1 | 0 | 0 |
| 4 | 1 | 1 | + ¼ |
| 5 | 1 | 1 | 0 |
| 6 | 0 | 1 | + ¼ |
| 7 | 0 | 1 | 0 |
| 8 | 0 | 0 | + ¼ |
| 9 | 0 | 0 | 0 |

**Fig. 7**

**Fig. 8**

| Letzte Abtastung | | Aktuelle Abtastung | | Inkrement |
| --- | --- | --- | --- | --- |
| $A_{digital}$ | $B_{digital}$ | $A_{digital}$ | $B_{digital}$ | $[\Delta B\,(2A-1) - \Delta A\,(2B-1)]/4$ |
| 0 | 0 | 0 | 0 | 0 |
| 0 | 1 | 0 | 1 | 0 |
| 1 | 0 | 1 | 0 | 0 |
| 1 | 1 | 1 | 1 | 0 |
| 0 | 0 | 0 | 1 | $-\frac{1}{4}$ |
| 0 | 1 | 1 | 1 | $-\frac{1}{4}$ |
| 1 | 0 | 0 | 0 | $-\frac{1}{4}$ |
| 1 | 1 | 1 | 0 | $-\frac{1}{4}$ |
| 0 | 0 | 1 | 0 | $+\frac{1}{4}$ |
| 0 | 1 | 0 | 0 | $+\frac{1}{4}$ |
| 1 | 0 | 1 | 1 | $+\frac{1}{4}$ |
| 1 | 1 | 0 | 1 | $+\frac{1}{4}$ |

**Fig. 9**

**Fig. 10**

**Fig. 11**

| $A_{digital}$ zuletzt | $A_{digital}$ aktuell | $B_{digital}$ (aktuell) | Inkrement | |
|:---:|:---:|:---:|:---:|:---|
| 0 | 1 | 0 | +½ | pos. Flanke an A |
| 1 | 0 | 1 | +½ | neg. Flanke an A |
| 0 | 1 | 1 | -½ | pos. Flanke an A |
| 1 | 0 | 0 | -½ | neg. Flanke an A |

**Fig. 12**

**Fig. 13A**

**Fig. 13B**

**Fig. 14**

**Fig. 15**

180

104

10

Abtastkommando

Sensor
A

Sensor-
Elektronik
(Fig. 8 oder 14)

SW

Ablauf-
Steuerung

52; 152

182

176

Abtastkommando

Sensor
C

Analoge
Mittelwertbildung

Puls nur bei jedem
n-ten Abtastkommando
an Sensor A

186

184

**Fig. 16**

**Fig. 17**

**Fig. 18**

**Fig. 19**

| N-letzte Abtastung | | Aktuelle Abtastung | | Inkrement |
|:---:|:---:|:---:|:---:|:---:|
| $A_{digital}$ | $B_{digital}$ | $A_{digital}$ | $B_{digital}$ | |
| 0 | 0 | 0 | 0 | 0 |
| 0 | 0 | 0 | 1 | - ¼ |
| 0 | 0 | 1 | 0 | + ¼ |
| 0 | 0 | 1 | 1 | + ½ |
| 0 | 1 | 0 | 0 | + ¼ |
| 0 | 1 | 0 | 1 | 0 |
| 0 | 1 | 1 | 0 | + ½ |
| 0 | 1 | 1 | 1 | - ¼ |
| 1 | 0 | 0 | 0 | - ¼ |
| 1 | 0 | 0 | 1 | + ½ |
| 1 | 0 | 1 | 0 | 0 |
| 1 | 0 | 1 | 1 | + ¼ |
| 1 | 1 | 0 | 0 | + ½ |
| 1 | 1 | 0 | 1 | + ¼ |
| 1 | 1 | 1 | 0 | - ¼ |
| 1 | 1 | 1 | 1 | 0 |

**Fig. 20**

| $A_{digital}$ vorletzt | $A_{digital}$ zuletzt | $A_{digital}$ aktuell | $B_{digital}$ (aktuell) | Inkrement | | |
|---|---|---|---|---|---|---|
| | | | | | | |
| 0 | 0 | 1 | 0 | $+\frac{1}{2}$ | pos. Flanke an A | langsam |
| 1 | 1 | 0 | 1 | $+\frac{1}{2}$ | neg. Flanke an A | langsam |
| | | | | | | |
| 0 | 0 | 1 | 1 | $-\frac{1}{2}$ | pos. Flanke an A | langsam |
| 1 | 1 | 0 | 0 | $-\frac{1}{2}$ | neg. Flanke an A | langsam |
| | | | | | | |
| 1 | 0 | 1 | X | $+\frac{1}{2}$ | pos. Flanke an A | schnell |
| 0 | 1 | 0 | X | $+\frac{1}{2}$ | neg. Flanke an A | schnell |

**Fig. 21**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3519215 A1
- DE 19725806 A1
- DE 3923398 C1
- DE 19908612 A1
- DE 102005054342 A1

- DE 102008018099 A1
- EP 1191310 A2
- US 20080272834 A1
- US 6031223 A
- WO 02073735 A2